# EUROPÄISCHE PATENTSCHRIFT

(11) **EP 0 766 717 B1**
(45) Veröffentlichungstag und Bekanntmachung des Hinweises auf die Patenterteilung: **17.03.1999**
(21) Anmeldenummer: 95924253.8
(22) Anmeldetag: 16.06.1995
(51) Int. Cl.: C09D 133/02

(54) **AUS MINDESTENS DREI KOMPONENTEN BESTEHENDES BESCHICHTUNGSMITTEL, VERFAHREN ZU SEINER HERSTELLUNG SOWIE SEINE VERWENDUNG**
AT LEAST THREE-PART COATING AGENT, PROCESS FOR PRODUCING IT AND ITS USE
AGENT DE REVETEMENT A AU MOINS TROIS COMPOSANTS, SON PROCEDE DE FABRICATION ET SON UTILISATION

(30) Priorität: 22.06.1994 DE 4421823
(43) Veröffentlichungstag der Anmeldung: 09.04.1997
(73) Patentinhaber: BASF Coatings Aktiengesellschaft, 48165 Münster (DE)
(72) Erfinder: MAYER, Bernd, D-48165 Münster (DE); NIENHAUS, Egbert, D-59387 Ascheberg (DE); MEISENBURG Uwe, 47259 Duisburg (DE)
(86) Internationale Anmeldenummer: EP9502333
(87) Internationale Veröffentlichungsnummer: WO9535348

(56) Entgegenhaltungen:
- EP-A- 0 256 540
- WO-A-94/07932

## Beschreibung

Gegenstand der vorliegenden Erfindung ist ein aus mindestens drei Komponenten bestehendes Beschichtungsmittel auf der Basis eines in einem oder mehreren organischen Lösemitteln gelösten oder dispergierten, hydroxyl- und carboxylgruppenhaltigen Polymers und eines isocyanatgruppenhaltigen Vernetzungsmittels.

Die vorliegende Erfindung betrifft außerdem ein Verfahren zur Herstellung dieser Beschichtungsmittel sowie die Verwendung der Beschichtungsmittel in der Reparaturlackierung, für die Beschichtung von Kunststoffen sowie als Decklack oder Füller.

Im Bereich der Autoreparaturlackierung eingesetzte konventionelle, d.h. organisch gelöste, Beschichtungsmittel auf der Basis hydroxylgruppenhaltiger Bindemittel und isocyanatgruppenhaltiger Vernetzungsmittel stellen üblicherweise Mehrkomponentensysteme dar. Die eine Komponente enthält das Bindemittel, ggf. Pigmente und Füllstoffe sowie übliche Hilfs- und Zusatzstoffe, die andere Komponente enthält das Vernetzungsmittel. Ferner wird noch ein im wesentlichen aus einer Mischung verschiedener Lösemittel bestehender Einstellzusatz zur Einstellung der gewünschten Viskosität des Beschichtungsmittels bereitgestellt.

Die Lackindustrie ist aber aus ökologischen und ökonomischen Gründen bestrebt, einen möglichst großen Teil der in Lacken eingesetzten organischen Lösemittel durch Wasser zu ersetzen. Insbesondere bei der Automobillackierung besteht ein großer Bedarf an wäßrigen Lacken. Dies gilt sowohl für den Bereich der Automobilserienlackierung als auch für den Bereich der Autoreparaturlackierung.

Wäßrige Beschichtungsmittel kommen dabei insbesondere im Bereich der Decklacke zum Einsatz. Unter Decklacken werden hierbei Lacke verstanden, die zur Herstellung der obersten Lackschicht verwendet werden. Die oberste Lackschicht kann dabei einschichtig oder mehrschichtig, insbesondere zweischichtig sein. Zweischichtige Decklackierungen bestehen aus einer pigmentierten Basislackschicht und einer auf der Basislackschicht aufgebrachten unpigmentierten oder nur mit transparenten Pigmenten pigmentierten Klarlackschicht.

Zweischichtlackierungen werden heute nach dem Naß-in-Naß-Verfahren hergestellt, bei dem ein pigmentierter Basislack vorlackiert wird und die so erhaltene Basislackschicht ohne Einbrennschritt mit einem Klarlack überlackiert und anschließend Basislackschicht und Klarlackschicht zusammen gehärtet werden. Dieses Verfahren ist ökonomisch sehr vorteilhaft, stellt aber hohe Anforderungen an den Basislack und den Klarlack. Der auf den noch nicht gehärteten Basislack applizierte Klarlack darf die Basislackschicht nicht anlösen oder sonst wie stören, weil sonst Lackierungen mit schlechtem Aussehen erhalten werden. Dies gilt insbesondere für Lackierungen, bei denen Basislacke, die Effektpigmente (z.B. Metallpigmente, insbesondere Aluminiumflakes oder Perlglanzpigmente) enthalten, eingesetzt werden. Ferner müssen die Deckbeschichtungszusammensetzungen mit Hilfe von automatischen Lackieranlagen durch Spritzen applizierbar sein. Dazu müssen sie bei Spritzviskosität einen so hohen Feststoffgehalt aufweisen, daß mit 1 bis 2 Spritzgängen (Kreuzgängen) Lackfilme mit ausreichender Schichtdicke erhalten werden, und sie müssen eingebrannte Lackfilme liefern, die ein gutes Aussehen (guter Verlauf, hoher Glanz, geringe Kocherneigung, guter Decklackstand und hohe Härte) sowie eine gute Witterungsbeständigkeit zeigen.

Im Bereich der Autoreparaturlackierung besteht außerdem noch die Forderung, daß die eingesetzten Beschichtungsmittel bei niedrigen Temperaturen (im allgemeinen < 80°C) aushärtbar sind und auch bei Aushärtung bei diesen niedrigen Temperaturen zu Filmen mit den geforderten guten mechanischen Eigenschaften führen.

Aus der EP-B-358 979 sind wäßrige Zweikomponenten-Polyurethanbeschichtungsmittel bekannt, die ein in Wasser dispergiertes, hydroxylgruppenhaltiges Polyacrylatharz sowie eine Polyisocyanatkomponente enthalten. Diese in der EP-B-358 979 beschriebenen Lacke zeigen allerdings hinsichtlich Glanz, Ausspannung (geringe Narbe der Beschichtung), Kocherneigung und dadurch bedingter Spritzsicherheit sowie hinsichtlich der Witterungsbeständigkeit, insbesondere hinsichtlich der Beständigkeit im Schwitzwasserkonstantklima (40°C, 240 h), Verarbeitbarkeit (Viskositätsabfall und zu kurze Topfzeit) und Härte große Nachteile.

Weiterhin ist aus der DE-AS 25 07 884 ein Verfahren zur Herstellung von wäßrigen Beschichtungsmitteln bekannt, bei dem zunächst eine Lösung eines carboxylgruppenhaltigen Polyacrylats und/oder Polyesters in einem organischen Lösemittel hergestellt wird, ggf. Vernetzungsmittel sowie Pigmente und Füllstoffe in der organischen Lösung dispergiert werden und die resultierende Dispersion nach Neutralisation der Carboxylgruppen des Bindemittels in Wasser dispergiert wird.

Nachteilig bei diesem Verfahren ist, daß das organische Lösemittel nach Herstellung der wäßrigen Dispersionen durch eine azeotrope Destillation entfernt werden muß. Dieser zusätzliche Verfahrensschritt hat zusätzliche Kosten zur Folge. Ferner ist diese destillative Entfernung des Lösemittels nur beim Hersteller der Beschichtungsmittel, nicht aber beim Kunden möglich. Es müssen daher die fertigen, wäßrigen Lacke transportiert und gelagert werden, was insbesondere im Bereich der Autoreparaturlackierung häufig zu Problemen führt, da dort sehr lange Lagerstabilitäten von mindestens 24 Monaten gefordert werden.

Als Vernetzungsmittel werden zur Herstellung der in der DE-AS 25 07 884 beschriebenen Beschichtungsmittel blockierte Polyisocyanate, Epoxidharze und/oder Aminoplastharze eingesetzt. Diese dort beschriebenen Beschichtungsmittel härten daher erst bei erhöhten Temperaturen zwischen 100 und 300°C aus und sind deshalb nicht für den Bereich der Reparaturlackierung geeignet.

Schließlich sind aus der EP-A-368 499 wäßrige Beschichtungsmittel bekannt, die als hydroxylgruppenhaltige Bindemittel Polyether oder ethergruppenhaltige Polyester und als Vernetzungsmittel Amin-/Formaldehydharze enthalten. Diese Beschichtungsmittel werden dadurch hergestellt, daß das Bindemittel und das Vernetzungsmittel zunächst in einem organischen Lösemittel hergestellt werden. Diese Mischung wird kurz vor der Applikation des Beschichtungsmittels mit einem Härtungskatalysator versetzt und mit Wasser auf die gewünschte Viskosität eingestellt.

Diese aus der EP-A-368 499 bekannten wäßrigen Beschichtungsmittel weisen aber den Nachteil einer völlig unzureichenden Verträglichkeit der einzelnen Komponenten des Beschichtungsmittels auf. Sie eignen sich daher nicht zur Herstellung von Klarlacken. Darüber hinaus härten diese Beschichtungsmittel nur bei erhöhten Temperaturen und sind daher nicht für den Bereich der Reparaturlackierung geeignet. Nachteilig ist schließlich auch die unzureichende Witterungsstabilität der resultierenden Beschichtungen.

Der vorliegenden Erfindung liegt somit die Aufgabe zugrunde, ein wäßriges Beschichtungsmittel zur Verfügung zu stellen, das gegenüber den aus der EP-B-358 979 bekannten wäßrigen Zweikomponenten-Polyurethan-Beschichtungsmitteln verbesserte Eigenschaften aufweist und/oder verbesserte Lackfilme liefert. Das neue Beschichtungsmittel sollte vor allem einen im Vergleich zu wäßrigen Beschichtungsmitteln auf der Basis wäßriger Acrylatcopolymerisatdispersionen verbesserten Verlauf, verbesserten Glanz, verbesserte Ausspannung (geringe Narbe), geringere Kocherneigung, verbesserte Spritzsicherheit, verbesserte Fülle und eine verbesserte Witterungsbeständigkeit der resultierenden Beschichtungen gewährleisten.

Weiterhin sollte das neue Beschichtungsmittel für den Bereich der Automobilreparaturlackierung geeignet sein, d.h. bei niedrigen Temperaturen (i. a. ≲ 80°C) aushärtbar sein und zu Beschichtungen führen, die die Anforderungen, die üblicherweise an einen Autoreparaturlack gestellt werden, zumindest erfüllen. Das Beschichtungsmittel sollte daher beispielsweise einen guten Glanz (≥ 85 E bei 20°), eine hohe Härte (≥ 110 Schläge) und eine gute Witterungsbeständigkeit (nach 10 Tagen Konstantklima ≤ m1g1) aufweisen.

Diese Aufgabe wurde überraschenderweise durch das Beschichtungsmittel der eingangs genannten Art gelöst, das dadurch gekennzeichnet ist, daß
1.) die Komponente (I) als Bindemittel (A)
   (A1) mindestens ein in einem oder mehreren organischen, wasserverdünnbaren Lösemitteln gelöstes oder dispergiertes, hydroxyl- und carboxylgruppenhaltiges Acrylatcopolymerisat (A1) mit einem zahlenmittleren Molekulargewicht zwischen 1.000 und 30.000, einer OH-Zahl von 40 bis 200 mgKOH/g und einer Säurezahl von 5 bis 150 mgKOH/g und/oder
   (A2) mindestens ein in einem oder mehreren organischen, wasserverdünnbaren Lösemitteln gelöstes oder dispergiertes, hydroxyl- und carboxylgruppenhaltiges Polyesterharz (A2) mit einem zahlenmittleren Molekulargewicht zwischen 1.000 und 30.000, einer OH-Zahl von 30 bis 250 mgKOH/g und einer Säurezahl von 5 bis 150 mgKOH/g und/oder
   (A3) mindestens ein in einem oder mehreren organischen, wasserverdünnbaren Lösemitteln gelöstes oder dispergiertes, hydroxyl- und carboxylgruppenhaltiges Polyurethanharz (A3) mit einem zahlenmittleren Molekulargewicht zwischen 1.000 und 30.000, einer OH-Zahl von 20 bis 200 mgKOH/g und einer Säurezahl von 5 bis 150 mgKOH/g und
   (A4) ggf. mindestens ein weiteres Bindemittel enthält, wobei die Bindemittel (A1) und/oder (A2) und/oder (A3) und/oder (A4) so ausgewählt werden, daß eine 50 %ige Lösung des Bindemittels (A) in Ethoxyethylpropionat bei 23°C eine Viskosität von <= 2,5 dPa.s aufweist,
2.) die Komponente (II) als Vernetzungsmittel (F) mindestens ein ggf. in einem oder mehreren organischen Lösemitteln gelöstes oder dispergiertes, nichtblockiertes Di- und/oder Polyisocyanat (F1) und ggf. mindestens ein weiteres Vernetzungsmittel, bestehend aus mindestens einer Epoxidverbindung (F2) mit mindestens zwei Epoxidgruppen pro Molekül und/oder ggf. mindestens einem Aminoplastharz (F3), enthält und
3.) die Komponente (III) im wesentlichen bindemittelfrei ist und Wasser enthält.

Die vorliegende Erfindung betrifft außerdem ein Verfahren zur Herstellung dieser Beschichtungsmittel sowie die Verwendung der Beschichtungsmittel in der Reparaturlackierung, für die Beschichtung von Kunststoffen sowie als Decklack oder Füller.

Es ist überraschend, daß die erfindungsgemäßen Beschichtungsmittel bessere Eigenschaften aufweisen als wäßrige Beschichtungsmittel, die die gleichen Bindemittel und Vernetzer enthalten, bei denen aber die Bindemittel entsprechend der Lehre der EP-B-358 979 als wäßrige Dispersion und nicht als organische Lösung bzw. Dispersion in das Beschichtungsmittel eingearbeitet wurden. So zeichnen sich die erfindungsgemäßen Beschichtungsmittel im Vergleich zu diesen Beschichtungsmitteln durch einen verbesserten Glanz, verbesserte Ausspannung (geringe Narbe) , geringere Kocherneigung und dadurch bedingt durch eine bessere Spritzsicherheit und durch eine verbesserte Witterungsbeständigkeit (Schwitzwasserkonstantklima-Test) aus.

Es ist ferner überraschend, daß die erfindungsgemäßen Beschichtungsmittel aus den mindestens drei Komponenten durch einfaches Mischen hergestellt werden können, ohne daß aufwendige Apparaturen zum Mischen bzw. Dispergieren erforderlich sind. Die erfindungsgemäßen Beschichtungsmittel eignen sich daher insbesondere für den Bereich der Autoreparaturlackierung, da die Beschichtungsmittel vom Lackierer direkt vor der Applikation der Beschichtungsmittel durch einfaches Mischen der Komponenten hergestellt und bei niedrigen Temperaturen ausgehärtet werden können.

Vorteilhaft ist ferner, daß die aus den mindestens drei Komponenten hergestellten, wäßrigen Beschichtungsmittel nur einen geringen Gehalt an flüchtigen organischen Lösemitteln aufweisen ( VOC = Volatile Organic Content <= 2,8 pounds per gallon ), obwohl die Beschichtungsmittel unter Verwendung organisch gelöster bzw. dispergierter Bindemittel und Vernetzer hergestellt werden. Außerdem führen die erfindungsgemäßen Beschichtungsmittel überraschenderweise zu Beschichtungen mit einem hohen Glanz, guter Fülle, gutem Verlauf, hoher Härte, geringer Kocherneigung und einer guten Witterungsbeständigkeit.

Darüber hinaus gewährleisten die erfindungsgemäßen Beschichtungsmittel eine hohe Variabilität, da nicht nur für wäßrige Beschichtungsmittel empfohlene Vernetzungsmittel, Pigmente und Additive eingesetzt werden können, sondern auch Vernetzungsmittel, Pigmente und Additive eingesetzt werden können, die in konventionellen Systemen eingesetzt werden.

Schließlich zeichnen sich die erfindungsgemäßen Beschichtungsmittel durch eine sehr gute Lagerstabilität aus, die der von konventionellen Beschichtungsmitteln entspricht.

Im folgenden werden nun zunächst die einzelnen Komponenten des erfindungsgemäßen Beschichtungsmittels näher erläutert.

Es ist erfindungswesentlich, daß die Komponente (I) des erfindungsgemäßen Beschichtungsmittels als Bindemittel (A)
(A1) mindestens ein in einem oder mehreren organischen, wasserverdünnbaren Lösemitteln gelöstes oder dispergiertes, hydroxyl- und carboxylgruppenhaltiges Acrylatcopolymerisat (A1) mit einem zahlenmittleren Molekulargewicht zwischen 1.000 und 30.000, einer OH-Zahl von 40 bis 200 mgKOH/g und einer Säurezahl von 5 bis 150 mgKOH/g und/oder
(A2) mindestens ein in einem oder mehreren organischen, wasserverdünnbaren Lösemitteln gelöstes oder dispergiertes, hydroxyl- und carboxylgruppenhaltiges Polyesterharz (A2) mit einem zahlenmittleren Molekulargewicht zwischen 1.000 und 30.000, einer OH-Zahl von 30 bis 250 mgKOH/g und einer Säurezahl von 5 bis 150 mgKOH/g und/oder
(A3) mindestens ein in einem oder mehreren organischen, wasserverdünnbaren Lösemitteln gelöstes oder dispergiertes, hydroxyl- und carboxylgruppenhaltiges Polyurethanharz (A3) mit einem zahlenmittleren Molekulargewicht zwischen 1.000 und 30.000, einer OH-Zahl von 20 bis 200 mgKOH/g und einer Säurezahl von 5 bis 150 mgKOH/g und
(A4) ggf. ein weiteres Bindemittel
enthält.

Die Bindemittel (A1) und/oder (A2) und/oder (A3) und/oder (A4) werden dabei so ausgewählt, daß eine 50 %ige Lösung des Bindemittels (A) in Ethoxyethylpropionat bei 23°C eine Viskosität von kleiner gleich 2,5 dPa.s, bevorzugt von kleiner gleich 2,0 dPa.s, aufweist.

Als hydroxyl- und carboxylgruppenhaltiges Acrylatcopolymerisat (A1) sind alle Acrylatcopolymerisate mit den angegebenen OH-Zahlen, Säurezahlen und Molekulargewichten geeignet. Bevorzugt werden Acrylatcopolymerisate eingesetzt, die als 50 %ige Lösung in Ethoxyethylpropionat bei 23°C eine Viskosität <= 3,0 dPa.s, bevorzugt eine Viskosität <= 2,0 dPa.s, aufweisen.

Bevorzugt werden ferner als Komponente (A1) Acrylatcopolymerisate eingesetzt, die erhältlich sind durch Polymerisation in einem organischen Lösemittel oder einem Lösemittelgemisch und in Gegenwart mindestens eines Polymerisationsinitiators von
a1) einem von (a2), (a3), (a4), (a5) und (a6) verschiedenen, mit (a2), (a3), (a4), (a5) und (a6) copolymerisierbaren, im wesentlichen carboxylgruppenfreien (Meth)acrylsäureester oder einem Gemisch aus solchen Monomeren,
a2) einem mit (a1), (a3), (a4), (a5) und (a6) copolymerisierbaren, von (a5) verschiedenen, ethylenisch ungesättigten Monomer, das mindestens eine Hydroxylgruppe pro Molekül trägt und im wesentlichen carboxylgruppenfrei ist, oder einem Gemisch aus solchen Monomeren,
a3) einem mindestens eine Carboxylgruppe pro Molekül tragenden, mit (a1), (a2), (a4), (a5) und (a6) copolymerisierbaren, ethylenisch ungesättigten Monomer oder einem Gemisch aus solchen Monomeren und
a4) ggf. einem oder mehreren Vinylestern von in α-Stellung verzweigten Monocarbonsäuren mit 5 bis 18 C-Atomen je Molekül und/oder
a5) ggf. mindestens einem Umsetzungsprodukt aus Acrylsäure und/oder Methacrylsäure mit dem Glycidylester einer in α-Stellung verzweigten Monocarbonsäure mit 5 bis 18 C-Atomen je Molekül oder anstelle des Umsetzungsproduktes einer äquivalenten Menge Acryl- und/oder Methacrylsäure, die dann während oder nach der Polymerisationsreaktion mit dem Glycidylester einer in α-Stellung verzweigten Monocarbonsäure mit 5 bis 18 C-Atomen je Molekül umgesetzt wird,
a6) ggf. einem mit (a1), (a2), (a3), (a4), und (a5) copolymerisierbaren, von (a1), (a2), (a4) und (a5) verschiedenen, im wesentlichen carboxylgruppenfreien, ethylenisch ungesättigten Monomer oder einem Gemisch aus solchen Monomeren,
wobei (a1), (a2), (a3), (a4), (a5) und (a6) in Art und Menge so ausgewählt werden, daß das Polyacrylatharz (A1) die gewünschte OH-Zahl, Säurezahl und das gewünschte Molekulargewicht aufweist.

Zur Herstellung der erfindungsgemäß eingesetzten Polyacrylatharze kann als Komponente (a1) jeder mit (a2), (a3), (a4), (a5) und (a6) copolymerisierbare, im wesentlichen carboxylgruppenfreie Ester der (Meth)acrylsäure oder ein Gemisch aus solchen (Meth)acrylsäureestern eingesetzt werden. Als Beispiele werden Alkylacrylate und Alkylmethacrylate mit bis zu 20 Kohlenstoffatomen im Alkylrest, wie z.B. Methyl-, Ethyl-, Propyl-, Butyl-, Hexyl-, Ethylhexyl-, Stearyl- und Laurylacrylat und -methacrylat und cycloaliphatische (Meth)acrylsäureester, wie z.B. Cyclohexyl(meth)acrylat, Isobornylacrylat und t-Butylcyclohexyl(meth)acrylat genannt.

Als Komponente (a1) können auch Ethyltriglykol(meth)acrylat und Methoxyoligoglykol(meth)acrylat mit einem zahlenmittleren Molekulargewicht von vorzugsweise 550 oder andere ethoxilierte und/oder propoxilierte hydroxylgruppenfreie (Meth)acrylsäurederivate eingesetzt werden.

Als Komponente (a2) können mit (a1), (a2), (a3), (a4), (a5) und (a6) copolymerisierbare und von (a5) verschiedene, ethylenisch ungesättigte Monomere, die mindestens eine Hydroxylgruppe pro Molekül tragen und im wesentlichen carboxylgruppenfrei sind oder ein Gemisch aus solchen Monomeren eingesetzt werden. Als Beispiele werden Hydroxyalkylester der Acrylsäure, Methacrylsäure oder einer anderen α,β-ethylenisch ungesättigten Carbonsäure genannt. Diese Ester können sich von einem Alkylenglykol ableiten, das mit der Säure verestert ist, oder sie können durch Umsetzung der Säure mit einem Alkylenoxid erhalten werden. Als Komponente (a2) werden vorzugsweise Hydroxyalkylester der Acrylsäure oder Methacrylsäure, in denen die Hydroxyalkylgruppe bis zu 20 Kohlenstoffatome enthält, Umsetzungsprodukte aus cyclischen Estern, wie z.B. ε-Caprolacton und diesen Hydroxyalkylestern, oder Mischungen aus diesen Hydroxyalkylestern bzw. ε-Caprolacton-modifizierten Hydroxyalkylestern eingesetzt.

Als Beispiele für derartige Hydroxyalkylester werden 2-Hydroxyethylacrylat, 2-Hydroxypropylacrylat, 3-Hydroxypropylacrylat, 2-Hydroxypropylmethacrylat, 3-Hydroxypropylmethacrylat, 2-Hydroxyethylmethacrylat, 4-Hydroxybutylacrylat, 4-Hydroxybutylmethacrylat, Hydroxystearylacrylat und Hydroxistearylmethacrylat genannt. Entsprechende Ester von anderen ungesättigten Säuren, wie z.B. Ethacrylsäure, Crotonsäure und ähnliche Säuren mit bis zu etwa 6 C-Atomen pro Molekül, können auch eingesetzt werden. Ferner können als Komponente (a2) auch olefinisch ungesättigte Polyole eingesetzt werden. Bevorzugte Polyacrylatharze (A) werden erhalten, wenn als Komponente (a2) zumindest teilweise Trimethylolpropanmonoallylether eingesetzt wird. Der Anteil an Trimethylolpropanmonoallylether beträgt üblicherweise 2 bis 10 Gew.-%, bezogen auf das Gesamtgewicht der zur Herstellung des Polyacrylatharzes eingesetzten Monomeren (a1) bis (a6). Daneben ist es aber auch möglich, 2 bis 10 Gew.-%, bezogen auf das Gesamtgewicht der zur Herstellung des Polyacrylatharzes eingesetzten Monomeren, Trimethylolpropanmonoallylether zum fertigen Polyacrylatharz zuzusetzen. Die olefinisch ungesättigten Polyole, wie insbesondere Trimethylolpropanmonoallylether, können als alleinige hydroxylgruppenhaltige Monomere, insbesondere aber anteilsmäßig in Kombination mit anderen der genannten hydroxylgruppenhaltigen Monomeren, eingesetzt werden.

Als Komponente (a3) kann jedes mindestens eine Carboxylgruppe pro Molekül tragende, mit (a1), (a2), (a4), (a5) und (a6) copolymerisierbare, ethylenisch ungesättigte Monomer oder ein Gemisch aus solchen Monomeren eingesetzt werden. Als Komponente (a3) werden vorzugsweise Acrylsäure und/oder Methacrylsäure eingesetzt. Es können aber auch andere ethylenisch ungesättigte Säuren mit bis zu 6 C-Atomen im Molekül eingesetzt werden. Als Beispiele für solche Säuren werden Ethacrylsäure, Crotonsäure, Maleinsäure, Fumarsäure und Itaconsäure genannt. Als Komponente (a3) können auch Maleinsäuremono(meth)acryloyloxyethylester, Bernsteinsäuremono(meth)acryloyloxyethylester und Phthalsäuremono(meth)acryloyloxyethylester eingesetzt werden.

Als Komponente (a4) werden ein oder mehrere Vinylester von in α-Stellung verzweigten Monocarbonsäuren mit 5 bis 18 C-Atomen im Molekül eingesetzt. Die verzweigten Monocarbonsäuren können erhalten werden durch Umsetzung von Ameisensäure oder Kohlenmonoxid und Wasser mit Olefinen in Anwesenheit eines flüssigen, stark sauren Katalysators; die Olefine können Crack-Produkte von paraffinischen Kohlenwasserstoffen, wie Mineralölfraktionen, sein und können sowohl verzweigte wie geradkettige acyclische und/oder cycloaliphatische Olefine enthalten. Bei der Umsetzung solcher Olefine mit Ameisensäure bzw. mit Kohlenmonoxid und Wasser entsteht ein Gemisch aus Carbonsäuren, bei denen die Carboxylgruppen vorwiegend an einem quaternären Kohlenstoffatom sitzen. Andere olefinische Ausgangsstoffe sind z.B. Propylentrimer, Propylentetramer und Diisobutylen. Die Vinylester können aber auch auf an sich bekannte Weise aus den Säuren hergestellt werden, z.B. indem man die Säure mit Acetylen reagieren läßt.
Besonders bevorzugt werden - wegen der guten Verfügbarkeit- Vinylester von gesättigten aliphatischen Monocarbonsäuren mit 9 bis 11 C-Atomen, die am α-C-Atom verzweigt sind, eingesetzt.

Als Komponente (a5) wird das Umsetzungsprodukt aus Acrylsäure und/oder Methacrylsäure mit dem Glycidylester einer in α-Stellung verzweigten Monocarbonsäure mit 5 bis 18 C-Atomen je Molekül eingesetzt. Glycidylester stark verzweigter Monocarbonsäuren sind unter dem Handelsnamen "Cardura" erhältlich. Die Umsetzung der Acryl- oder Methacrylsäure mit dem Glycidylester einer Carbonsäure mit einem tertiären α-Kohlenstoffatom kann vorher, während oder nach der Polymerisationsreaktion erfolgen. Bevorzugt wird als Komponente (a5) das Umsetzungsprodukt von Acryl- und/oder Methacrylsäure mit dem Glycidylester der Versaticsäure eingesetzt. Dieser Glycidylester ist unter dem Namen "Cardura E10" im Handel erhältlich.

Als Komponente (a6) können alle mit (a1), (a2), (a3), (a4) und (a5) copolymerisierbaren, von (a1), (a2), (a3) und (a4) verschiedenen, im wesentlichen carboxylgruppenfreien ethylenisch ungesättigten Monomere oder Gemische aus solchen Monomeren eingesetzt werden. Als Komponente (a6) werden vorzugsweise vinylaromatische Kohlenwasserstoffe, wie Styrol, α-Alkylstyrol und Vinyltoluol, eingesetzt.

Als Komponente (a6) können in Kombination mit anderen als Komponente (a6) geeignet genannten Monomeren auch Polysiloxanmakromonomere eingesetzt werden. Geeignet sind Polysiloxanmakromonomere, die ein zahlenmittleres Molekulargewicht von 1.000 bis 40.000, bevorzugt von 2.000 bis 10.000, und im Mittel 0,5 bis 2,5, bevorzugt 0,5 bis 1,5, ethylenisch ungesättigte Doppelbindungen pro Molekül aufweisen. Geeignet sind beispielsweise die in der DE-OS 38 07 571 auf den Seiten 5 bis 7, die in der DE-OS 37 06 095 in den Spalten 3 bis 7, die in der EP-B 358 153 auf den Seiten 3 bis 6 und die in der US-PS 4,754,014 in den Spalten 5 bis 9 beschriebenen Polysiloxanmakromonomere. Ferner sind auch andere Acryloxisilan-enthaltende Vinylmonomere mit den obengenannten Molekulargewichten und Gehalten an ethylenisch ungesättigten Doppelbindungen geeignet, beispielsweise Verbindungen, die herstellbar sind durch Umsetzung hydroxifunktioneller Silane mit Epichlorhydrin und anschließender Umsetzung des Reaktionsproduktes mit Methacrylsäure und/oder Hydroxyalkylestern der (Meth)acrylsäure.

Bevorzugt werden als Komponente (a6) Polysiloxanmakromonomere der folgenden Formel eingesetzt: 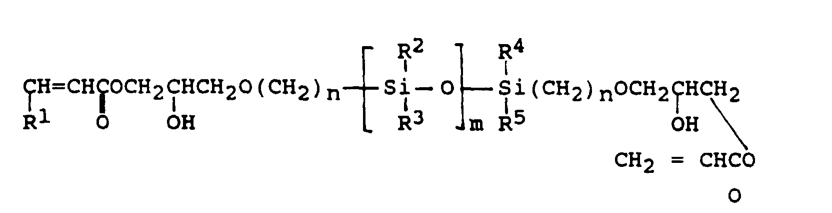 mit
R¹ = H oder CH₃
R², R³, R⁴, R⁵ = gleiche oder verschiedene aliphatische Kohlenwasserstoffreste mit 1 bis 8 C-Atomen, insbesondere Methyl, oder Phenylrest.
n = 2 bis 5, bevorzugt 3
m = 8 bis 30

Besonders bevorzugt wird das α,ω-acryloxyorganofunktionelle Polydimethylsiloxan der Formel 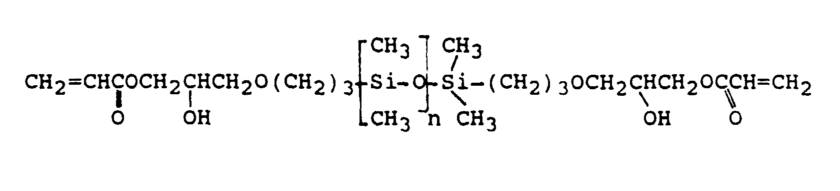 mit n ≈ 9, einem Acryloxyäquivalent von 550 g pro Äquivalent, einer OH-Zahl von 102 mg KOH/g und einer Viskosität von 240 mPa·s (25°C) eingesetzt.

Beispiele für als Komponente (a6) geeignete Polysiloxanmakromonomere sind auch die in der internationalen Patentanmeldung mit der Veröffentlichungsnummer WO 92/22615 auf Seite 12, Zeile 18, bis Seite 18, Zeile 10, genannten Verbindungen.

Die Einsatzmenge des oder der Polysiloxanmakromonomeren (a6) zur Modifizierung der Acrylatcopolymerisate (A1) beträgt weniger als 5 Gew.-%, bevorzugt 0,05 bis 2,5 Gew.-%, besonders bevorzugt 0,05 bis 0,8 Gew.-%, jeweils bezogen auf das Gesamtgewicht der zur Herstellung des Copolymerisats (A1) eingesetzten Monomeren.

Die Verwendung derartiger Polysiloxanmakromonomerer führt zu einer Verbesserung des Slips des wäßrigen Polyurethan-Beschichtungsmittels.

Die Art und Menge der Komponenten (a1) bis (a6) wird so ausgewählt, daß das Polyacrylatharz (A1) die gewünschte OH-Zahl, Säurezahl und Glasübergangstemperatur aufweist. Besonders bevorzugt eingesetzte Acrylatharze werden erhalten durch Polymerisation von
(a1) 20 bis 60 Gew.-%, bevorzugt 30 bis 50 Gew.-%, der Komponente (a1),
(a2) 10 bis 40 Gew.-%, bevorzugt 15 bis 35 Gew.-%, der Komponente (a2),
(a3) 1 bis 15 Gew.-%, bevorzugt 2 bis 8 Gew.-%, der Komponente (a3),
(a4) 0 bis 25 Gew.-%, bevorzugt 5 bis 15 Gew.-%, der Komponente (a4),
(a5) 0 bis 25 Gew.-%, bevorzugt 5 bis 15 Gew.-%, der Komponente (a5) und
(a6) 5 bis 30 Gew.-%, bevorzugt 10 bis 20 Gew.-%, der Komponente (a6),
wobei die Summe der Gewichtsanteile der Komponenten (a1) bis (a6) jeweils 100 Gew.-% beträgt.

Die Herstellung der erfindungsgemäß eingesetzten Polyacrylatharze (A1) erfolgt in einem organischen Lösemittel oder Lösemittelgemisch und in Gegenwart mindestens eines Polymerisationsinitiators. Als organische Lösemittel und Polymerisationsinitiatoren werden die für die Herstellung von Polyacrylatharzen üblichen und für die Herstellung von wäßrigen Dispersionen geeigneten Lösemittel und Polymerisationsinitiatoren eingesetzt. Als Beispiele für brauchbare Lösemittel werden Butylglykol, 2-Methoxypropanol, n-Butanol, Methoxybutanol, n-Propanol, Ethylenglykolmonomethylether, Ethylenglykolmonoethylether, Ethylenglykolmonobutylether, Diethylenglykolmonomethylether, Diethylenglykolmonoethylether, Diethylenglykoldiethylether, Diethylenglykolmonobutylether, 2-Hydroxypropionsäureethylester und 3-Methyl-3-methoxybutanol sowie Derivate auf Basis von Propylenglykol, z.B. Ethylethoxypropionat, Isopropoxypropanol, Methoxypropylacetat und ähnliche, genannt. Es ist dabei auch möglich, die Polyacrylatarze (A1) zunächst in einem Lösemittel, das nicht wasserverdünnbar ist, herzustellen und dieses Lösemittel nach der Polymerisation zumindest teilweise durch wasserverdünnbares Lösemittel zu ersetzen.
Als Beispiele für brauchbare Polymerisationsinitiatoren werden freie Radikale bildende Initiatoren, wie z.B. t-Butylperethylhexanoat, Benzoylperoxid, Azobisisobutyronitril und t-Butylperbenzoat genannt. Die Initiatoren werden bevorzugt in einer Menge von 2 bis 25 Gew.-%, besonders bevorzugt von 4 bis 10 Gew.-%, bezogen auf das Gesamtgewicht der Monomeren, eingesetzt.

Die Polymerisation wird zweckmäßigerweise bei einer Temperatur von 80 bis 160°C, vorzugsweise 110 bis 160°C, durchgeführt. Bevorzugt werden als Lösemittel Ethoxiethylpropionat und Isopropoxypropanol eingesetzt.

Bevorzugt wird das Polyacrylatharz (A1) nach einem Zweistufenverfahren hergestellt, da so die resultierenden wäßrigen Beschichtungsmittel eine bessere Verarbeitbarkeit aufweisen. Bevorzugt werden daher Polyacrylatharze eingesetzt, die erhältlich sind, indem
I. ein Gemisch aus (a1), (a2), (a4), (a5) und (a6) oder ein Gemisch aus Teilen der Komponenten (a1), (a2), (a4), (a5) und (a6) in einem organischen Lösemittel polymerisiert wird,
II. nachdem mindestens 60 Gew.-% des aus (a1), (a2), (a4), (a5) und ggf. (a6) bestehenden Gemisches zugegeben worden sind, (a3) und der gegebenenfalls vorhandene Rest der Komponenten (a1), (a2), (a4), (a5) und (a6) zugegeben werden und weiter polymerisiert wird und
III. nach Beendigung der Polymerisation das erhaltene Polyacrylatharz ggf. zumindest teilweise neutralisiert wird.

Daneben ist es aber auch möglich, die Komponenten (a4) und/oder (a5) zusammen mit zumindest einem Teil des Lösemittels vorzulegen und die restlichen Komponenten zuzudosieren. Außerdem können auch die Komponenten (a4) und/oder (a5) nur teilweise zusammen mit zumindest einem Teil des Lösemittels in die Vorlage gegeben werden und der Rest dieser Komponenten wie oben beschrieben zugegeben werden. Bevorzugt werden beispielsweise mindestens 20 Gew.-% des Lösemittels und ca. 10 Gew.-% der Komponente (a4) und (a5) sowie ggf. Teilen der Komponenten (a1) und (a6) vorgelegt.
Bevorzugt ist außerdem die Herstellung der erfindungsgemäß eingesetzten Polyacrylatharze (A1) durch ein Zweistufenverfahren, bei dem die Stufe (I) 1 bis 8 Stunden, vorzugsweise 1,5 bis 4 Stunden, dauert und die Zugabe der Mischung aus (a3) und dem ggf. vorhandenen Rest der Komponenten (a1), (a2), (a4), (a5) und (a6) innerhalb von 20 bis 120 Min., vorzugsweise innerhalb von 30 bis 90 Min., erfolgt. Nach Beendigung der Zugabe der Mischung aus (a3)und dem ggf. vorhandenen Rest der Komponenten (a1), (a2), (a4), (a5) und (a6) wird so lange weiter polymerisiert, bis alle eingesetzten Monomeren im wesentlichen vollständig umgesetzt worden sind.

Die Menge und Zugabegeschwindigkeit des Initiators wird vorzugsweise so gewählt, daß ein Polyacrylatharz (A1) mit einem zahlenmittleren Molekulargewicht von 1000 bis 30.000 erhalten wird. Es ist bevorzugt, daß mit dem Initiatorzulauf einige Zeit, i. a. ca. 15 Minuten, vor dem Zulauf der Monomeren begonnen wird. Ferner ist ein Verfahren bevorzugt, bei dem die Initiatorzugabe zum gleichen Zeitpunkt wie die Zugabe der Monomeren begonnen und etwa eine halbe Stunde nachdem die Zugabe der Monomeren beendet worden ist, beendet wird. Der Initiator wird vorzugsweise in konstanter Menge pro Zeiteinheit zugegeben. Nach Beendigung der Initiatorzugabe wird das Reaktionsgemisch noch so lange (in der Regel 1 1/2 h) auf Polymerisationstemperatur gehalten, bis alle eingesetzten Monomere im wesentlichen vollständig umgesetzt worden sind. "Im wesentlichen vollständig umgesetzt" soll bedeuten, daß vorzugsweise 100 Gew.-% der eingesetzten Monomere umgesetzt worden sind, daß es aber auch möglich ist, daß ein geringer Restmonomerengehalt von höchstens bis zu etwa 0,5 Gew.-%, bezogen auf das Gewicht der Reaktionsmischung, unumgesetzt zurückbleiben kann.

Bevorzugt werden die Monomeren zur Herstellung der Polyacrylatharze (A1) bei einem nicht allzu hohen Polymerisationsfestkörper, bevorzugt bei einem Polymerisationsfestkörper von 70 bis 50 Gew.-%, polymerisiert und anschließend die Lösemittel teilweise destillativ entfernt, so daß die entstehenden Polyacrylatharzlösungen einen Festkörpergehalt von bevorzugt 80 bis 60 Gew.-% aufweisen.

Als hydroxyl- und carboxylgruppenhaltiger Polyester (A2) sind alle Polyester mit den angegebenen OH-Zahlen, Säurezahlen und Molekularzahlen geeignet. Bevorzugt werden Polyester eingesetzt, die als 50 %ige Lösung in Ethoxyethylpropionat bei 23°C eine Viskosität <= 2,0 dPa.s, bevorzugt eine Viskosität <= 1,0 dPa.s, aufweisen.

Bevorzugt werden als Komponente (A2) Polyester eingesetzt, die sind erhältlich durch Umsetzung von
p1) Polycarbonsäuren oder deren veresterungsfähigen Derivaten, ggf. zusammen mit Monocarbonsäuren,
p2) Polyolen, ggf. zusammen mit Monoolen,
p3) ggf. weiteren modifizierenden Komponenten und
p4) ggf. einer mit dem Reaktionsprodukt aus (p1), (p2) und ggf. (p3) reaktionsfähigen Komponente.

Als Beispiele für Polycarbonsäuren, die als Komponente (p1) eingesetzt werden können, seien aromatische, aliphatische und cycloaliphatische Polycarbonsäuren genannt. Bevorzugt werden als Komponente (p1) werden aromatische und/oder aliphatische Polycarbonsäuren eingesetzt.

Beispiele für geeignete Polycarbonsäuren sind Phthalsäure, Isophthalsäure, Terephthalsäure, Halogenphthalsäuren, wie Tetrachlor- bzw. Tetrabromphthalsäure, Adipinsäure, Glutarsäure, Acelainsäure, Sebacinsäure, Fumarsäure, Maleinsäure, Trimellithsäure, Pyromellithsäure, Tetrahydrophthalsäure, Hexahydrophthalsäure, 1,2-Cyclohexandicarbonsäure, 1,3-Cyclohexandicarbonsäure, 1,4-Cyclohexandicarbonsäure, 4-Methylhexahydrophthalsäure, Endomethylentetrahydrophthalsäure, Tricyclodecan-Dicarbonsäure, Endoethylenhexahydrophthalsäure, Camphersäure, Cyclohexantetracarbonsäure, Cyclobutantetracarbonsäure u.a. Die cycloaliphtatischen Polycarbonsäuren können sowohl in ihrer cis- als auch in ihrer trans-Form sowie als Gemisch beider Formen eingesetzt werden. Geeignet sind auch die veresterungsfähigen Derivate der obengenannten Polycarbonsäuren, wie z.B. deren ein- oder mehrwertige Ester mit aliphatischen Alkoholen mit 1 bis 4-C-Atomen oder Hydroxyalkoholen mit 1 bis 4 C-Atomen. Außerdem können auch die Anhydride der obengenannten Säuren eingesetzt werden, sofern sie existieren.

Gegebenenfalls können zusammen mit den Polycarbonsäuren auch Monocarbonsäuren eingesetzt werden, wie beispielsweise Benzoesäure, tert. Butylbenzoesäure, Laurinsäure, Isononansäure und Fettsäuren natürlich vorkommender Öle. Bevorzugt wird als Monocarbonsäure Isononansäure eingesetzt.

Geeignete Alkoholkomponenten (p2) zur Herstellung des Polyesters (A2) sind mehrwertige Alkohole, wie Ethylenglykol, Propandiole, Butandiole, Hexandiole, Hydroxypivalinsäureneopentylester, Neopentylglykol, Diethylenglykol, Cyclohexandiol, Cyclohexandimethanol, Trimethylpentandiol, Ethylbutylpropandiol, Ditrimethylolpropan, Trimethylolethan, Trimethylolpropan, Glycerin, Pentaerythrit, Dipentaerythrit, Trishydroxiethylisocyanat, Polyethylenglykol, Polypropylenglykol, gegebenenfalls zusammen mit einwertigen Alkoholen, wie beispielsweise Butanol, Octanol, Laurylalkohol, ethoxylierten bzw. propoxylierten Phenolen.

Als Komponente (p3) zur Herstellung der Polyester (A2) geeignet sind insbesondere Verbindungen, die eine gegenüber den funktionellen Gruppen des Polyesters reaktive Gruppe aufweisen, ausgenommen die als Komponente (p4) genannten Verbindungen. Als modifizierende Komponente (p3) werden bevorzugt Polyisocyanate und/oder Diepoxidverbindungen, gegebenenfalls auch Monoisocyanate und/oder Monoepoxidverbindungen verwendet. Geeignete Komponenten (p3) sind beispielsweise in der DE-A-40 24 204 auf Seite 4, Zeilen 4 bis 9, beschrieben.

Als Komponente (p4) zur Herstellung der Polyester (A2) geeignet sind Verbindungen, die außer einer gegenüber den funktionellen Gruppen des Polyesters (A2) reaktiven Gruppe noch eine tertiäre Aminogruppe aufweisen, beispielsweise Monoisocyanate mit mindestens einer tertiären Aminogruppe oder Mercaptoverbindungen mit mindestens einer tertiären Aminogruppe. Wegen Einzelheiten wird auf die DE-A-40 24 204, Seite 4, Zeilen 10 bis 49, verwiesen.

Die Herstellung der Polyester (A2) erfolgt nach den bekannten Methoden der Veresterung, wie dies beispielsweise in der DE-A-40 24 204, Seite 4, Zeilen 50 bis 65, beschrieben ist.

Die Umsetzung erfolgt dabei üblicherweise bei Temperaturen zwischen 180 und 280°C, ggf. in Gegenwart eines geeigneten Veresterungskatalysators, wie z.B. Lithiumoctoat, Dibutylzinnoxid, Dibutylzinndilaurat und para-Toluolsulfonsäure.

Üblicherweise wird die Herstellung der Polyester (A2) in Gegenwart geringer Mengen eines geeigneten Lösungsmittels als Schleppmittel durchgeführt. Als Schleppmittel werden z. B. aromatische Kohlenwasserstoffe, wie insbesondere Xylol und (cyclo)alipha-tische Kohlenwasserstoffe, z. B. Cyclohexan, eingesetzt.

Besonders bevorzugt werden als Komponente (A2) Polyester eingesetzt, die nach einem zweistufigen Verfahren hergestellt worden sind, indem zunächst ein hydroxylgruppenhaltiger Polyester mit einer OH-Zahl von 100 bis 300 mgKOH/g, einer Säurezahl von weniger als 10 mgKOH/g und einem zahlenmittleren Molekulargewicht von 500 bis 2.000 hergestellt wird, der dann in einer zweiten Stufe mit Carbonsäureanhydriden zu dem gewünschten Polyester (A2) umgesetzt wird. Die Menge an Carbonsäureanhydriden wird dabei so gewählt, daß der erhaltene Polyester die gewünschte Säurezahl aufweist. Für diese Umsetzung sind alle üblicherweise eingesetzten Säureanhydride, wie z.B. Hexahydrophthalsäureanhydrid, Trimellithsäureanhydrid, Pyromellithsäureanhydrid, Phthalsäureanhydrid, Tetrahydrophthalsäureanhydrid, Bernsteinsäureanhydrid und Gemische dieser und/oder anderer Anhydride und insbesondere Anhyride aromatischer Polycarbonsäuren, wie Trimellithsäureanhydrid, geeignet.

Es ist ggf. möglich, daß das Polyacrylatharz (A1) zumindest teilweise in Gegenwart des Polyesters (A2) hergestellt worden ist. Vorteilhafterweise werden in diesem Fall mindestens 20 Gew.-% und besonders vorteilhafterweise 40 bis 80 Gew.-% der Komponente (A1) in Gegenwart der Komponente (A2) hergestellt.
Die ggf. restliche Menge der Komponente (A1) wird der Bindemittellösung anschließend zugegeben. Dabei ist es möglich, daß dieses bereits polymerisierte Harz die gleiche Monomerzusammensetzung aufweist wie das in Gegenwart des Polyesters aufgebaute Polyacrylatharz. Es kann aber auch ein hydroxylgruppenhaltiges Polyacrylatharz mit einer unterschiedlichen Monomerzusammensetzung zugefügt werden. Außerdem ist es möglich, eine Mischung verschiedener Polyacrylatharze und/oder Polyester zuzufügen, wobei ggf. ein Harz die gleiche Monomerzusammensetzung aufweist wie das in Gegenwart des Polyesters aufgebaute Polyacrylatharz.

Als hydroxyl- und carboxylgruppenhaltiger Polyurethanharz (A3) sind alle Polyurethanharze mit den angegebenen OH-Zahlen, Säurezahlen und Molekularzahlen geeignet. Bevorzugt werden Polyurethanharze eingesetzt, die als 50 %ige Lösung in Ethoxyethylpropionat bei 23°C eine Viskosität <= 5,0 dPa.s, bevorzugt eine Viskosität <= 3,5 dPa.s, aufweisen.

Geeignete Polyurethanharze werden beispielsweise in den folgenden Schriften beschrieben: EP-A-355 433, DE-A-35 45 618, DE-A-38 13 866. DE-A-32 10 051, DE-A-26 24 442, DE-A-37 39 332, US-A-4,719,132, EP-A-89 497, US-A-4,558,090, US-A-4,489,135, DE-A-36 28 124, EP-A-158 099, DE-A-29 26 584, EP-A-195 931, DE-A-33 21 180 und DE-A-40 05 961.

In der Komponente (I) werden vorzugsweise Polyurethanharze eingesetzt, die durch Umsetzung von isocyanatgruppenhaltigen Präpolymeren mit gegenüber Isocyanatgruppen reaktiven Verbindungen herstellbar sind.

Die Herstellung von isocyanatgruppenhaltigen Präpolymeren kann durch Reaktion von Polyolen mit einer Hydroxylzahl von 10 bis 1800, bevorzugt 50 bis 1200 mg KOH/g, mit überschüssigen Polyisocyanaten bei Temperaturen von bis zu 150 °C, bevorzugt 50 bis 130°C, in organischen Lösemitteln, die nicht mit Isocyanaten reagieren können, erfolgen. Das Äquivalentverhältnis von NCO- zu OH-Gruppen liegt zwischen 2,0:1,0 und > 1,0:1,0, bevorzugt zwischen 1,4:1 und 1,1:1.

Die zur Herstellung des Präpolymeren eingesetzten Polyole können niedermolekular und/oder hochmolokular sein und reaktionsträge anionische bzw. zur Anionenbildung befähigte Gruppen enthalten. Es können auch niedermolekulare Polyole mit einem Molekulargewicht von 60 bis zu 400, zur Herstellung der isocyanatgrup-penhaltigen Präpolymere mitverwendet werden. Es werden dabei Mengen von bis zu 30 Gew.-% der gesamten
Polyol-Bestandteile, bevorzugt etwa 2 bis 20 Gew.-%, eingesetzt.
Um ein NCO-Präpolymeres hoher Flexibilität zu erhalten, sollte ein hoher Anteil eines überwiegend linearen Polyols mit einer bevorzugten OH-Zahl von 30 bis 150 mg KOH/g zugesetzt werden. Bis zu 97 Gew.-% des gesamten Polyols können aus gesättigten und ungesättigten Polyestern und/oder Polyethern mit einer Molmasse Mn von 400 bis 5000 bestehen. Die ausgewählten Polyetherdiole sollen keine übermäßigen Mengen an Ethergruppen einbringen, weil sonst die gebildeten Polymere in Wasser anquellen. Polyesterdiole werden durch Veresterung von organischen Dicarbonsäuren oder ihren Anhydriden mit organischen Diolen hergestellt oder leiten sich von einer Hydroxicarbonsäure oder einem Lacton ab. Um verzweigte Polyesterpolyole herzustellen, können in geringem Umfang Polyole oder Polycarbonsäuren mit einer höheren Wertigkeit eingesetzt werden.

Bevorzugt besteht die zur Herstellung der Polyurethanharze eingesetzte Alkoholkomponente zumindest zu einem gewissen Anteil aus
u₁) mindestens einem Diol der Formel (I) 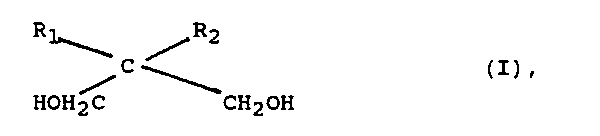 in der R₁ und R₂ jeweils einen gleichen oder verschiedenen Rest darstellen und für einen Alkylrest mit 1 bis 18 C-Atomen, einen Arylrest oder einen cycloaliphatischen Rest stehen, mit der Maßgabe, daß R₁ und/oder R₂ nicht Methyl sein darf, und/oder
u₂) mindestens einem Diol der Formel (II) 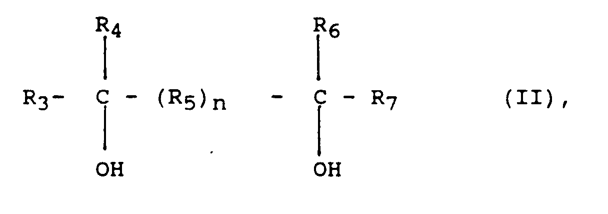 in der R₃, R₄, R₆ und R₇ jeweils gleiche oder verschiedene Reste darstellen und für einen Alkylrest mit 1 bis 6 C-Atomen, einen Cycloalkylrest oder einen Arylrest stehen und R₅ einen Alkylrest mit 1 bis 6 C-Atomen, einen Arylrest oder einen ungesättigten Alkylrest mit 1 bis 6 C-Atomen darstellt, und n entweder 0 oder 1 ist.

Als Komponente (u₁) sind alle Propandiole der Formel (I) geeignet, bei denen entweder R₁ oder R₂ oder R₁ und R₂ nicht gleich Methyl ist, wie beispielsweise 2-Butyl-2-ethylpropandio1-1,3, 2-Phenyl-2-methylpropandiol-1,3, 2-Propyl-2-ethylpropandiol-1,3, 2-Di-tert.-butylpropandiol-1,3, 2-Butyl-2-propylpropandiol-1,3, l-Dihydroxymethyl-bicyclo[2,2,1]heptan, 2,2-Diethylpropandiol-1,3, 2,2-Dipropylpropandio1-1,3, 2-cyclohexyl-2-methylpropandiol-1,3 und andere.

Als Komponente (u₂) können beispielsweise 2,5-Dimethylhexandiol-2,5, 2,5-Diethylhexandiol-2,5, 2-Ethyl-5-methylhexandiol-2,5, 2,4-Dimethylpentandiol-2,4, 2,3-Dimethylbutandiol-2,3, 1,4-(2'-Hydroxypropyl)benzol und 1,3-(2'-Hydroxypropyl)-benzol eingesetzt werden.

Bevorzugt werden als Komponente (u₁) 2-Propyl-2-ethylpropandiol-1,3, 2,2-Diethylpropandiol-1,3, 2-Butyl-2-ethylpropandiol-1,3 und 2-Phenyl-2-ethyl-propandiol-1,3 und als Komponente (u₂) 2,3-Dimethyl-butandiol-2,3 sowie 2,5-Dimethylhexandiol-2,5 ein-gesetzt. Besonders bevorzugt werden als Komponente (u₁) 2-Butyl-2-ethylpropandiol-1,3 sowie 2-Phenyl-2-ethyl-propandiol-1,3 und als Komponente (u₂) 2,5-Dimethyl-hexandiol-2,5 eingesetzt.
Die Komponenten (u₁) und/oder (u₂) werden üblicherweise in einer Menge von 0,5 bis 15 Gew.-%, bevorzugt 1 bis 7 Gew.-% eingesetzt, jeweils bezogen auf das Gesamtgewicht der zur Herstellung der Polyurethanharze eingesetzten Aufbaukomponenten.

Als typische multifunktionelle Isocyanate zur Herstellung der Polyurethanharze werden aliphatische, cycloaliphatische und/oder aromatische Polyisocyanate mit mindestens zwei Isocyanatgruppen pro Molekül verwendet. Bevorzugt werden die Isomeren oder Isomerengemische von organischen Diisocyanaten. Aufgrund ihrer guten Beständigkeit gegenüber ultraviolettem Licht ergeben (cyclo)aliphatische Diisocyanate Produkte mit geringer Vergilbungsneigung. Die zur Bildung des Präpolymeren gebrauchte Polyisocyanat-Komponente kann auch einen Anteil höherwertiger Polyisocyanate enthalten, vorausgesetzt dadurch wird keine Gelbildung verursacht. Als Triisocyanate haben sich Produkte bewährt, die durch Trimerisation oder Oligomerisation von Diisocyanaten oder durch Reaktion von Diisocyanaten mit polyfunktionellen OH- oder NH-Gruppen enthaltenden Verbindungen entstehen. Die mittlere Funktionalität kann gegebenenfalls durch Zusatz von Monoisocyanaten gesenkt werden.

Als Beispiele für einsetzbare Polyisocyanate werden Phenylendiisocyanat, Toluylendiisocyanat, Xylylendiisocyanat, Bisphenylendiisocyanat, Naphtylendiisocyanat, Diphenylmethandiisocyanat, Isophorondiisocyanat, Cyclobutandiisocyanat Cyclopentylendiisocyanat, Cyclohexylendiisocyanat, Methylcyclohexylendiisocyanat, Dicyclohexylmethandiisocyanat, Ethylendiisocyanat, Trimethylendiisocyanat, Tetramethylendiisocyanat, Pentamethylendiisocyanat, Hexamethylendiisocyanat, Propylendiisocyanat, Ethylethylendiisocyanat und Trimethylhexandiisocyanat genannt.

Zur Herstellung festkörperreicher Polyurethanharzlösungen werden insbesondere Diisocyanate der allgemeinen Formel (III) 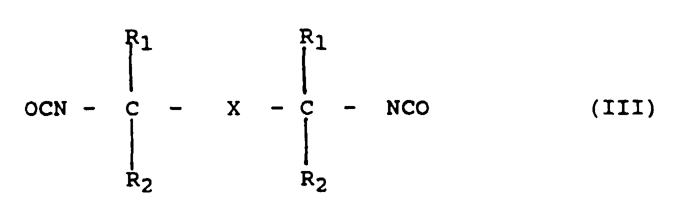 eingesetzt, wobei X für einen zweiwertigen, aromatischen Kohlenwasserstoffrest, vorzugsweise für einen ggf. Halogen-, Methyl- oder Methoxy-substituierten Naphthylen-, Diphenylen- oder 1,2-, 1,3- oder 1,4-Phenylenrest, besonders bevorzugt für einen 1,3-Phenylenrest und R₁ und R₂ für einen Alkylrest mit 1 - 4 C-Atomen, bevorzugt für einen Methylrest, stehen. Diisocyanate der Formel (III) sind bekannt (ihre Herstellung wird beispielsweise in der EP-A-101 832, US-PS-3,290,350, US-PS-4,130,577 und der US-PS-4,439,616 beschrieben) und zum Teil im Handel erhältlich (1,3-Bis-(2-isocyanatoprop-2-yl)-benzol wird beispielsweise von der American Cynamid Company unter dem Handelsnamen TMXDI (META)® verkauft).

Polyurethane sind im allgemeinen nicht mit Wasser verträglich, wenn nicht bei ihrer Synthese spezielle Bestandteile eingebaut und/oder besondere Herstellungsschritte vorgenommen werden. So können zur Herstellung der Polyurethanharze Verbindungen verwendet werden, die zwei mit Isocyanatgruppen reagierende H-aktive Gruppen und mindestens eine Gruppe enthalten, die die Wasserdispergierbarkeit gewährleistet. Geeignete Gruppen dieser Art sind nichtionische Gruppen (z. B. Polyether), anionische Gruppen, Gemische dieser beiden Gruppen oder kationische Gruppen.

So kann eine so große Säurezahl in das Polyurethanharz eingebaut werden, daß das neutralisierte Produkt stabil in Wasser zu dispergieren ist. Hierzu dienen Verbindungen, die mindestens eine gegenüber Isocyanatgruppen reaktive Gruppe und mindestens eine zur Anionenbildung befähigte Gruppe enthalten. Geeignete gegenüber Isocyanatgruppen reaktive Gruppen sind insbesondere Hydroxylgruppen sowie primäre und/oder sekundäre Aminogruppen. Gruppen, die zur Anionenbildung befähigt sind, sind Carboxyl-, Sulfonsäure- und/oder Phosphonsäuregruppen. Vorzugsweise werden Alkansäuren mit zwei Substituenten am α-ständigen Kohlenstoffatom eingesetzt. Der Substituent kann eine Hydroxylgruppe, eine Alkylgruppe oder eine Alkylolgruppe sein. Diese Polyole haben wenigstens eine, im allgemeinen 1 bis 3 Carboxylgruppen im Molekül. Sie haben zwei bis etwa 25, vorzugsweise 3 bis 10 Kohlenstoffatome. Das Carboxylgruppen enthaltene Polyol kann 3 bis 100 Gew.-%, vorzugsweise 5 bis 50 Gew.-%, des gesamten Polyolbestandteiles im NCO-Präpolymeren ausmachen.

Die durch die Carboxylgruppenneutralisation in Salzform verfügbare Menge an ionisierbaren Carboxylgruppen beträgt im allgemeinen wenigstens 0,4 Gew.-%, vorzugsweise wenigstens 0,7 Gew.-%, bezogen auf den Feststoff. Die obere Grenze beträgt etwa 12 Gew.-%. Die Menge an Dihydroxialkansäuren im unneutralisierten Präpolymer ergibt eine Säurezahl von wenigstens 5, vorzugsweise wenigstens 10. Bei sehr niedrigen Säurezahlen sind im allgemeinen weitere Maßnahmen zur Erzielung der Wasserdispergierbarkeit erforderlich.

Die obere Grenze der Säurezahl liegt bei 150, vorzugsweise bei 40 mg KOH/g, bezogen auf den Feststoff. Bevorzugt liegt die Säurezahl im Bereich von 20 bis 40 mg KOH/g.

Die Isocyanatgruppen des isocyanatgruppenhaltigen Präpolymers werden mit einem Modifizierungsmittel umgesetzt. Das Modifizierungsmittel wird dabei vorzugsweise in einer solchen Menge zugegeben, daß es zu Kettenverlängerungen und damit zu Molekulargewichtserhöhungen kommt. Als Modifizierungsmittel werden vorzugsweise organische Verbindungen, die Hydroxyl- und/oder sekundäre und/oder primäre Aminogruppen enthalten, insbesondere Di-, Tri- und/oder höherfunktionelle Polyole, eingesetzt. Als Beispiel für einsetzbare Polyole werden Trimethylolpropan, 1,3,4 Butantriol, Glycerin, Erythrit, Mesoerythrit, Arabit, Adonit usw. genannt. Bevorzugt wird Trimethylolpropan eingesetzt.

Zur Herstellung des erfindungsgemäßen Polyurethanharzes wird bevorzugt zunächst ein isocyanatgruppenaufweisendes Präpolymer hergestellt, aus dem dann durch weitere Umsetzung, bevorzugt Kettenverlängerung, das gewünschte Polyurethanharz hergestellt wird. Die Umsetzung der Komponenten (a), (b), (c) und (d) erfolgt dabei nach den gut bekannten Verfahren der organischen Chemie (vgl. z.B. Kunststoff-Handbuch, Band 7: Polyurethane, herausgegeben von Dr. Y. Oertel, Karl-Hanser-Verlag, München, Wien 1983), wobei bevorzugt eine stufenweise Umsetzung der Komponenten (z.B. Bildung eines ersten Zwischenproduktes aus den Komponenten (a), (b) und (c), das dann mit (d) zu einem zweiten Zwischenprodukt umgesetzt wird) durchgeführt wird. Es ist aber auch eine gleichzeitige Umsetzung der Komponenten (a), (b), (c) und (d) möglich. Beispiele für die Herstellung der Präpolymeren sind in der DE-OS 26 24 442 und der DE-OS 32 10 051 beschrieben. Daneben ist zur Herstellung der Polyurethanharze aber auch eine gleichzeitige Umsetzung der Komponenten (a), (b), (c), (d) und (e) möglich. Die Herstellung der Polyurethanharze kann nach den bekannten Verfahren erfolgen (z.B. Acetonverfahren).

Die Umsetzung der Komponenten (a), (b), (c) und (d) erfolgt aber bevorzugt in Ethoxiethylpropionat (EEP) als Lösemittel. Die Menge an Ethoxiethylpropionat kann dabei in weiten Grenzen variieren und sollte zur Bildung einer Präpolymerlösung mit geeigneter Viskosität ausreichen. Im allgemeinen werden bis zu 70 Gew.-%, bevorzugt 5 bis 50 Gew.-% und besonders bevorzugt weniger als 20 Gew.-% Lösemittel, bezogen auf den Festkörper, eingesetzt. So kann die Umsetzung beispielsweise ganz besonders bevorzugt bei einem Lösemittelgehalt von 10 - 15 Gew.-% EEP, bezogen auf den Festkörper, durchgeführt werden.
Die Umsetzung der Komponenten (a), (b), (c) und (d) kann gegebenenfalls in Gegenwart eines Katalysators, wie Organozinnverbindungen und/oder tertiären Aminen, erfolgen.
Zur Herstellung der Präpolymeren werden die Mengen der Komponenten (a), (b), (c) und (d) so gewählt, daß das Äquivalentverhältnis von NCO- zu OH-Gruppen zwischen 2,0 : 1,0 und > 1,0 : 1,0, bevorzugt zwischen 1,4 : 1 und 1,1 : 1, liegt.
Das NCO-Präpolymer enthält wenigstens etwa 0,5 Gew.-% Isocyanatgruppen, vorzugsweise wenigstens 1 Gew.-% NCO, bezogen auf den Feststoff. Die obere Grenze liegt bei etwa 15 Gew.-%, vorzugsweise 10 Gew.-%, besonders bevorzugt bei 5 Gew.-% NCO.

Als Komponente (A4) geeignet sind alle mit den übrigen Bestandteilen der Komponente (I) verträglichen, wasserverdünnbaren Bindemittel, beispielsweise acrylierte Polyurethanharze und/oder Polyesteracrylate.

Bevorzugt enthält die Komponente (I) als Bindemittel (A)
(A1) mindestens 50 Gew.-%, bevorzugt mindestens 80 Gew.-% mindestens eines Acrylatcopolymerisats (A1),
(A2) 0 bis 30 Gew.-%, bevorzugt 5 bis 20 Gew.-% mindestens eines Polyesters (A2),
(A3) 0 bis 30 Gew.-%, bevorzugt 5 bis 20 Gew.-% mindestens eines Polyurethanharzes (A3) und
(A4) 0 bis 10 Gew.-%, bevorzugt 0 bis 5 Gew.-% mindestens eines weiteren Bindemittels (A4),
wobei die Summe der Gewichtsanteile der Komponenten (A1) bis (A4) jeweils 100 Gew.-% beträgt.

Die Komponente (I) kann als Bestandteil (B) alle lacküblichen Pigmente enthalten. Dabei können sowohl die in wäßrigen Beschichtungsmitteln üblichen Pigmente, die mit Wasser nicht reagieren bzw. sich in Wasser nicht lösen, als auch die üblicherweise in konventionellen Beschichtungsmitteln eingesetzten Pigmente eingesetzt werden. Die Pigmente können aus anorganischen oder organischen Verbindungen bestehen und können effekt-und/oder farbgebend sein. Das erfindungsgemäße Beschichtungsmittel gewährleistet daher aufgrund dieser Vielzahl geeigneter Pigmente eine universelle Einsatzbreite der Beschichtungsmittel und ermöglicht die Realisierung einer Vielzahl von Farbtönen.

Als Effektpigmente können Metallplättchenpigmente, wie handelsübliche Aluminiumbronzen, gemäß DE-A-36 36 183 chromatierte Aluminiumbronzen, und handelsübliche Edelstahlbronzen sowie nicht metallische Effektpigmente, wie zum Beispiel Perlglanz- bzw. Interferenzpigmente, eingesetzt werden. Beispiele für geeignete anorganische farbgebende Pigmente sind Titandioxid, Eisenoxide, Sicotransgelb und Ruß. Beispiele für geeignete organische farbgebende Pigmente sind Indanthrenblau, Cromophthalrot, Irgazinorange und Heliogengrün.

Als Bestandteil (C) enthält die Komponente (I) mindestens ein organisches, wasserverdünnbares Lösemittel und ggf. weitere Lösemittel. Beispiele für geeignete Lösemittel sind insbesondere wassermischbare Lösemittel, wie z.B. Alkohole, Ester, Ketone, Ketoester, Glykoletherester u.ä. Bevorzugt eingesetzt werden Ester, Alkohole und Glykolether, besonders bevorzugt Ethoxyethylpropionat und Isopropoxypropanol.

Als Bestandteil (D) enthält die Komponente (I) mindestens ein Neutralisationsmittel. Beispiele für geeignete Neutralisationsmittel sind Ammoniak und Amine, wie z.B. Trimethylamin, Triethylamin, Tributylamin, Dimethylanilin, Diethylanilin, Triphenylamin, Dimethylethanolamin, Diethylethanolamin, Methyldiethanolamin und Triethanolamin. Die Neutralisation kann in organischer Phase oder in wäßriger Phase erfolgten. Bevorzugt wird als Neutralisationsmittel Dimethylethanolamin eingesetzt.

Die insgesamt in dem erfindungsgemäßen Beschichtungsmittel eingesetzte Menge an Neutralisationsmittel wird so gewählt, daß 1 bis 100 Äquivalente, bevorzugt 50 bis 90 Äquivalente der Carboxylgruppen des Bindemittels (A) neutralisiert werden.

Das Neutralisationsmittel kann dabei der Komponente (I) und/oder (II) und/oder (III) und/oder (IV) zugesetzt werden. Bevorzugt wird das Neutralisationsmittel aber entweder der Komponente (I) und/oder (III) zugesetzt.

Als Bestandteil (E) kann die Komponente (I) mindestens ein rheologiesteuerndes Additiv enthalten. Als Beispiele für rheologiesteuernde Additive werden genannt: vernetzte polymere Mikroteilchen, wie sie beispielsweise in der EP-A-38 127 offenbart sind, anorganische Schichtsilikate, wie z.B. Aluminium-Magnesium-Silikate, Natrium-Magnesium-Schichtsilikate und Natrium-Magnesium-Fluor-Lithium-Schichtsilikate des Montmorillonit-Typs, sowie synthetische Polymere mit ionischen und/oder assoziativ wirkenden Gruppen, wie Polyvinylalkohol, Poly(meth)acrylamid, Poly (meth)acrylsäure, Polyvinylpyrrolidon, Styrol-Malein-säureanhydrid- oder Ethylen-Maleinsäureanhydrid-Copolymere und ihre Derivate oder auch hydrophob modifizierte ethoxilierte Urethane oder Polyacrylate. Bevorzugt werden als rheologiesteuernde Additive anorganische Schichtsilikate eingesetzt.

Es ist besonders bevorzugt, daß in den Fällen, in denen ein anorganisches Schichtsilikat als rheologiesteuerndes Additiv eingesetzt wird, das anorganische Schichtsilikat auschließlich in der Lackkomponente (III) enthalten ist.

Die Komponente (I) kann außerdem mindestens noch ein weiteres übliches Lackadditiv enthalten. Beispiele für derartige Additive sind Entschäumer, Dispergierhilfsmittel, Emulgatoren, und Verlaufshilfsmittel.

Selbstverständlich können die genannten Additive auch separat dem Beschichtungsmittel zugesetzt werden. In diesem Fall werden die Additive dann als Komponente (IV) bezeichnet.

Bevorzugt werden zur Herstellung der erfindungsgemäßen Beschichtungsmittel Komponenten (I) eingesetzt, die aus
(A) 20 bis 90 Gew.-%, bevorzugt 35 bis 80 Gew.-%, des Bindemittels (A),
(B) 0 bis 60 Gew.-%, bevorzugt 5 bis 50 Gew.-% mindestens eines Pigments und/oder Füllstoffs,
(C) 5 bis 50 Gew.-%, bevorzugt 10 bis 40 Gew.-%, mindestens eines organischen, wasserverdünnbaren Lösemittels und
(D) 0 bis 20 Gew.-%, bevorzugt 2 bis 10 Gew.-%, mindestens eines Neutralisationsmittels
(E) 0 bis 20 Gew.-%, bevorzugt 2 bis 10 Gew.-%, mindestens eines üblichen Hilfs- und/oder Zusatzstoffes
bestehen, wobei die Summe der Gewichtsanteile der Komponenten (A) bis (E) jeweils 100 Gew.-% beträgt.

Es ist erfindungswesentlich, daß die Lackkomponente (II) als Vernetzungsmittel mindestens ein ggf. in einem oder mehreren organischen, wasserverdünnbaren Lösemitteln gelöstes oder dispergiertes, nichtblockiertes Di- und/oder Polyisocynat (F1) sowie ggf. mindestens ein weiteres Vernetzungsmittel, ausgewählt aus mindestens einer Epoxidverbindung (F2) mit mindestens zwei Epoxidgruppen pro Molekül und/oder mindestens einem Aminoplastharz (F3), enthält.

Bei der Polyisocyanatkomponente (F1) handelt es sich um beliebige organische Polyisocyanate mit aliphatisch, cycloaliphatisch, araliphatisch und/oder aromatisch gebundenen, freien Isocyanatgruppen. Bevorzugt werden Polyisocyanate mit 2 bis 5 Isocyanatgruppen pro Molekül und mit Viskositäten von 100 bis 2000 mPas (bei 23°C) eingesetzt. Gegebenenfalls können den Polyisocyanaten noch geringe Mengen organisches Lösemittel, bevorzugt 1 bis 25 Gew.-%, bezogen auf reines Polyisocyanat, zugegeben werden, um so die Einarbeitbarkeit des Isocyanates zu verbessern und ggf. die Viskosität des Polyisocyanates auf einen Wert innerhalb der obengenannten Bereiche abzusenken. Als Zusatzmittel geeignete Lösemittel für die Polyisocyanate sind beispielsweise Ethoxiethylpropionat, Butylacetat und ähnliches.

Beispiele für geeignete Isocyanate sind beispielsweise in "Methoden der organischen Chemie", Houben-Weyl, Band 14/2, 4. Auflage, Georg Thieme Verlag, Stuttgart 1963, Seite 61 bis 70, und von W. Siefken, Liebigs Ann. Chem. 562, 75 bis 136, beschrieben. Beispielsweise geeignet sind die bei der Beschreibung der Polyurethanharze (A3) genannten Isocyanate.

Es können auch Isocyanuratgruppen und/oder Biuretgruppen und/oder Allophanatgruppen und/oder Urethangruppen und/oder Harnstoffgruppen aufweisende Polyisocyanate eingesetzt werden. Urethangruppen aufweisende Polyisocyanate werden beispielsweise durch Umsetzung eines Teils der Isocyanatgruppen mit Polyolen, wie z.B. Trimethylolpropan und Glycerin, erhalten.

Vorzugsweise werden aliphatische oder cycloaliphatische Polyisocyanate, insbesondere Hexamethylendiisocyanat, dimerisiertes und trimerisiertes Hexamethylendiisocyanat, Isophorondiisocyanat, Dicyclohexylmethan-2,4'-diisocyanat oder Dicyclohexylmethan-4,4'-diisocyanat oder Mischungen aus diesen Polyisocyanaten eingesetzt. Ganz besonders bevorzugt werden Gemische aus Uretdion- und/oder Isocyanuratgruppen und/oder Allophanatgruppen aufweisenden Polyisocyanaten auf Basis von Hexamethylendiisocyanat, wie sie durch katalytische Oligomerisierung von Hexamethylendiisocyanat unter Verwendung von geeigneten Katalysatoren entstehen, eingesetzt. Die Polyisocyanatkomponente (B) kann im übrigen auch aus beliebigen Gemischen der beispielhaft genannten Polyisocyanate bestehen.

Die Polyisocyanatkomponente (F1) wird in den erfindungsgemäßen Beschichtungsmitteln vorteilhafterweise in einer Menge von mindestens 70 Gew.-%, besonders bevorzugt in einer Menge von 80 bis 100 Gew.-%, bezogen auf das Gesamtgewicht des Vernetzungsmittels (F), eingesetzt.

Beispiele für geeignete Polyepoxide (F2) sind alle bekannten aliphatischen und/oder cycloaliphatischen und/oder aromatischen Polyepoxide, beispielsweise auf Basis Bisphenol-A oder Bisphenol-F.

Als Komponente (F2) geeignet sind beispielsweise auch die im Handel unter den Bezeichnungen Epikote® der Firma Shell, Denacol der Firma Nagase Chemicals Ltd., Japan, erhältlichen Polyepoxide, wie z.B. Denacol EX-411 (Pentaerythritpolyglycidylether), Denacol EX-321 (Trimethylolpropanpolyglycidylether), Denacol EX-512 (Polyglycerolpolyglycidylether) und Denacol EX-521 (Polyglycerolpolyglycidylether).

Die Polyepoxidkomponente (F2) wird in den erfindungsgemäßen Beschichtungsmitteln vorteilhafterweise in einer Menge von 0 bis 30 Gew.-%, besonders bevorzugt in einer Menge von 2 bis 20 Gew.-%, bezogen auf das Gesamtgewicht des Vernetzungsmittels (F), eingesetzt.

Beispiele für geeignete Aminoplastharze (F3) sind iminofunktionelle Melaminharze, wie die im Handel unter dem Namen Cymel® 325 der Firma Cyanamid und Luwipal® LR 8839 der Firma BASF AG erhältlichen Produkte.

Das Aminoplastharz (F3) wird in den erfindungsgemäßen Beschichtungsmitteln vorteilhafterweise in einer Menge von 0 bis 30 Gew.-%, besonders bevorzugt in einer Menge von 2 bis 20 Gew.-%, bezogen auf das Gesamtgewicht des Vernetzungsmittels (F), eingesetzt.

Die Bestandteile (G) und (H) der Lackkomponente (II) entsprechen den Bestandteilen (C) und (E) der Lackkomponente (I).

Bevorzugt werden zur Herstellung der erfindungsgemäßen Beschichtungsmittel Komponenten (II) eingesetzt, die aus
(F) 50 bis 100 Gew.-%, bevorzugt 60 bis 90 Gew.-%, mindestens eines Vernetzungsmittels (F),
(G) 0 bis 50 Gew.-%, bevorzugt 10 bis 40 Gew.-%, mindestens eines organischen, wassermischbaren Lösemittels und
(H) 0 bis 20 Gew.-%, bevorzugt 0 bis 10 Gew.-% mindestens eines üblichen Hilfs- und/oder Zusatzstoffes,
bestehen, wobei die Summe der Gewichtsanteile der Komponenten (F) bis (H) jeweils 100 Gew.-% beträgt.

Die Bestandteile (J) und (K) der Lackkomponente (III) entsprechen den Bestandteilen (D) und (E) der Lackkomponente (I).

Bevorzugt werden zur Herstellung der erfindungsgemäßen Beschichtungsmittel Komponenten (III) eingesetzt, die aus
(I) 80 bis 100 Gew.-%, bevorzugt 80 bis 95 Gew.-% Wasser,
(J) 0 bis 20 Gew.-, bevorzugt 2 bis 10 Gew.-%, mindestens eines Neutralisationsmittels und
(K) 0 bis 20 Gew.-%, bevorzugt 2 bis 10 Gew.-%, mindestens eines üblichen Hilfs- und/oder Zusatzstoffes
(L) 0 bis 20 Gew.-%, bevorzugt 0 bis 10 Gew.-%, mindestens eines Emulsionspolymerisates
bestehen, wobei die Summe der Gewichtsanteile der Komponenten (I) bis (L) jeweils 100 Gew.-% beträgt.

Bevorzugt werden zur Herstellung der erfindungsgemäßen Beschichtungsmittel Komponenten (IV) eingesetzt, die aus einem Teil oder der gesamten Menge der in dem Beschichtungsmittel eingesetzten Hilfs- und Zusatzstoffe bestehen.

Die Komponenten (I) und (II) werden zur Herstellung der Beschichtungsmittel bevorzugt in solchen Mengen eingesetzt, daß das Äquivalentverhältnis von Hydroxylgruppen des Bindemittels (A) zu den vernetzenden Gruppen des Vernetzungsmittels (F) zwischen 1 : 2 und 2 : 1, bevorzugt zwischen 1 : 1,2 und 1 : 1,5, liegt. Die erfindungsgemäßen Beschichtungsmittel weisen außerdem bevorzugt einen Gesamtgehalt an üblichen Lackadditiven von 0 bis 10 Gew.-%, an organischen Lösemitteln von 5 bis 25 Gew.-%, bevorzugt von 10 bis 20 Gew.-%, an Wasser von 25 bis 70 Gew.-%, bevorzugt von 30 bis 60 Gew.-%, an Bindemittel von 15 bis 50 Gew.-%, bevorzugt von 20 bis 40 Gew.-%, an Vernetzungsmittel von 5 bis 30 Gew.-%, bevorzugt von 10 bis 20 Gew.-%, sowie an Pigmenten und/oder Füllstoffen von 0 bis 50 Gew.-%, bevorzugt von 0 bis 30 Gew.-%, auf, jeweils bezogen auf das Gesamtgewicht des Beschichtungsmittels.

Die Herstellung der Komponente (I) erfolgt nach dem Fachmann bekannten Methoden durch Mischen und ggf. Dispergieren der einzelnen Bestandteile. So erfolgt beispielsweise die Einarbeitung von farbgebenden Pigmenten üblicherweise durch Anreiben (Dispergieren) der jeweiligen Pigmente in einem oder mehreren Bindemitteln. Das Anreiben der Pigmente erfolgt mit Hilfe üblicher Vorrichtungen, wie beispielsweise Perlmühlen und Sandmühlen.

Die Einarbeitung der Effektpigmente erfolgt üblicherweise durch homogenes Mischen der Effektpigmente mit einem oder mehreren Lösemitteln. Diese Mischung wird dann in eine Mischung eines oder mehrerer der obenbeschriebenen Bindemittel, ggf. unter Zusatz von weiteren organischen Lösemitteln, mittels eines Rührers oder Dissolvers eingerührt.

Die Herstellung der Komponenten (II), (III) und ggf. (IV) erfolgt ebenfalls nach dem Fachmann gut bekannten Methoden durch Mischen bzw. Dispergieren der einzelnen Bestandteile.

Die erfindungsgemäßen Beschichtungsmittel können durch alle denkbaren Mischverfahren aus den Komponenten (I), (II), (III) und ggf. (IV) hergestellt werden. Dabei ist es aber erfindungswesentlich, daß bei der Herstellung der Beschichtungsmittel die Komponenten (I), (II), (III) und ggf. (IV) erst kurz vor der Applikation der Beschichtungsmittel gemischt und ggf. dispergiert werden.

So ist es beispielsweise möglich, zur Herstellung der erfindungsgemäßen Beschichtungsmittel zunächst die Komponenten (I) und (II) zu mischen, wobei in diesem Fall bevorzugt diese Komponenten (I) und (II) kein Neutralisationsmittel enthalten. Dann wird zu dieser Mischung ggf. die Komponente (IV) zugesetzt. Entweder wird dann die so erhaltene Mischung in die Neutralisationsmittel enthaltende Komponente (III) gegeben und das erhaltene Beschichtungsmittel dispergiert. Oder es wird dann in die so erhaltene Mischung die Neutralisationsmittel enthaltende Komponente (III) gegeben.

Ferner kann das erfindungsgemäße Beschichtungsmittel beispielsweise analog zu dem gerade beschriebenen Verfahren hergestellt werden, wobei allerdings das Neutralisationsmittel nicht in der Komponente (III) enthalten ist, sondern vor der Zugabe der Komponente (III) separat zugegeben wird.

Außerdem kann das erfindungsgemäße Beschichtungsmittel auch dadurch hergestellt werden, daß die Komponente (I) zunächst mit dem Neutralisationsmittel versetzt wird. Selbstverständlich kann anstelle dieses Mischens auch eine Komponente (I) eingesetzt werden, die bereits das Neutralisationsmittel enthält. Die so erhaltene Komponente(I) wird dann entweder
(i) mit der Komponente (II) und ggf. der Komponente (IV) gemischt (gleichzeitig oder aufeinanderfolgende Mischung mit (II) und ggf. (IV)), die so erhaltene Mischung wird dann entweder zu der Komponente (III) dazugegeben oder mit der Komponente (III) versetzt, und das so jeweils erhaltene Beschichtungsmittel wird noch durch Dispergieren homogenisiert oder
(ii) mit der Komponente (III) versetzt oder zu der Komponente (III) zugegeben und durch Dispergieren homogenisiert und anschließend werden die Komponenten (II) und ggf. (IV) zugegeben.

Bevorzugt werden die erfindungsgemäßen Beschichtungsmittel dadurch hergestellt, daß die bereits mit Neutralisationsmittel versetzte Komponente (I) mit Komponente (II) und ggf. Komponente (IV) gemischt wird und anschließend in Komponente (III) eindispergiert wird.

Die erfindungsgemäßen Beschichtungsmittel können durch übliche Applikationsmethoden, wie z.B. Spritzen, Rakeln, Streichen, Tauchen, auf beliebige Substrate, wie z.B. Metall, Holz, Kunststoff oder Papier, aufgebracht werden.

Die erfindungsgemäßen Beschichtungsmittel werden üblicherweise bei Temperaturen von unter 120°C, bevorzugt bei Temperaturen von maximal 80°C, gehärtet.

Die erfindungsgemäßen Beschichtungsmittel werden vorzugsweise zur Herstellung von Decklackierungen eingesetzt. Die erfindungsgemäßen Beschichtungsmittel können sowohl bei der Serien- als auch bei der Reparaturlackierung von Automobilkarosserien eingesetzt werden. Sie werden vorzugsweise aber im Bereich der Reparaturlackierung eingesetzt.

Die erfindungsgemäßen wäßrigen Beschichtungsmittel können als Füller sowie zur Herstellung einschichtiger Decklackierungen sowie als pigmentierte Basislacke oder als Klarlacke in einem Verfahren zur Herstellung einer mehrschichtigen Lackierung eingesetzt werden (Base coat- /Clear coat-Verfahren). Bevorzugt werden die erfindungsgemäßen Beschichtungsmittel aber als Klarlacke eingesetzt.

Die Erfindung wird nun anhand von Ausführungsbeispielen näher erläutert. Alle Angaben über Teile und Prozente sind dabei Gewichtsangaben, falls nicht ausdrücklich etwas anderes festgestellt wird.

### Beispiele 1 bis 14 sowie Vergleichsbeispiele 1 und 2

### 1. Herstellung eines erfindungsgemäß eingesetzten wasserverdünnbaren Acrylatharzes (A1)

In einem Stahlkessel, ausgestattet mit Monomerzulauf, Initiatorzulauf, Thermometer, Ölheizung und Rückflußkühler werden 74 Gew.-Teile Isopropoxypropanol vorgelegt und auf 120 °C aufgeheizt. Dann wird eine Lösung von 8,0 Gew.-Teilen t-Butylperethylhexanoat in 6,0 Gew.-Teilen Ethoxyethylpropionat in einer solchen Geschwindigkeit zugegeben, daß die Zugabe nach 4 h 30 min abgeschlossen ist. Mit Beginn der Zugabe der t-Butylperethylhexanoatlösung wird auch mit der Zugabe der Monomermischung aus (a1), (a2), (a3) und (a6)
(a1): 18,5 Teile n-Butylmethacrylat
   12,4 Teile Methylmethacrylat,
   10,0 Teile Laurylacrylat
   (Handelsprodukt Methacrylester 13 der Firma Rhöm AG, Darmstadt)
   10,0 Teile Cyclohexylmethacrylat
(a6): 15,0 Gew.-Teile Styrol
(a2): 29,0 Gew.-Teile Hydroxyethylacrylat
(a3): 5,1 Gew.-Teile Acrylsäure
begonnen.

Die Mischung (a1), (a2), (a3) und (a6) wird in einer solchen Geschwindigkeit zugegeben, daß die Zugabe nach 4 Stunden abgeschlossen ist. Nach Abschluß der Zugabe der t-Butylperethylhexanoatlösung wird die Reaktionsmischung noch 2 h bei 120 °C gehalten. Das Reaktionsgemisch wird durch Abdestillieren des organischen Lösemittels auf einen Festkörpergehalt von 80 % eingestellt. Das so erhaltene Acrylatharz weist eine OH-Zahl von 140 mgKOH/g Festharz, eine Säurezahl von 40 mgKOH/g Festharz, ein zahlenmittleres Molekulargewicht von 2.800 und ein gewichtmittleres Molekulargewicht von 8.700 auf. Die Viskosität einer 50%igen Lösung des Acrylatharzes in Ethoxyethylpropionat beträgt 2,9 dPa·s (23°C).

### 2. Herstellung einer wäßrigen Dispersion des Acrylatharzes (VA1)

Die Herstellung des Acrylatharzes (VA1) erfolgt analog zur Herstellung des Acrylatharzes (A1). Im Unterschied zur Herstellung des Acrylatharzes (A1) wird allerdings nach Einstellen des Festkörpergehaltes auf 80 % bei 90°C zuerst Dimethylethanolamin (Neutralisationsgrad: 85 %) zugegeben und dann durch Zugabe von Wasser auf einen Festkörper von 40 % eingestellt. Das organische Lösemittel wird mittels Destillation unter Vakuum bis auf ≤ 3 % entfernt. Mit Wasser wird ein Endfestkörper von 40 % eingestellt.

### 3. Herstellung eines erfindungsgemäß eingesetzten wasserverdünnbaren Polyesters (A2)

Zuerst werden 11,728 Teile Hexandiol-1,6, 40,543 Teile Hydroxypivalinsäureneopentylester, 6,658 Teile Trimethylolpropan und 26,775 Teile Hexahydrophthalsäureanhydrid in einem Reaktor, ausgestattet mit Ölthermostat und Rührer, auf 230°C erhitzt. Als Schleppmittel dient Cyclohexan. Nach Erreichen einer Säurezahl von <= 5 mgKOH/g Feststoff wird auf 150°C abgekühlt und es werden 14,296 Teile Trimellithsäureanhydrid zugegeben. Danach wird auf 190°C aufgeheizt und solange bei dieser Temperatur verestert, bis eine Säurezahl von 30 mgKOH/g Festharz erreicht ist. Das Polyesterharz wird mit Isopropoxypropanol auf einen Festkörpergehalt von 80% verdünnt. Der so erhaltene Polyester weist eine OH-Zahl von 130 mgKOH/g Festharz und ein zahlenmittleres Molekulargewicht von 1.500 sowie ein gewichtsmittleres Molekulargewicht von 3.800 auf. Die Viskosität einer 50%igen Lösung des Polyesters in Ethoxyethylpropionat beträgt 0,8 dPa·s (23°C).

### 4. Herstellung eines erfindungsgemäß eingesetzten Polyurethanharzes (A3)

### 4.1. Herstellung eines Polyesterdiols B

In einer für die Polyestersynthese üblichen Apparatur wurden 371,2 g Pripol 1013 (handelsübliche Dimerfettsäure mit einem Monomerengehalt von maximal 0,1 %, einem Trimerengehalt von maximal 2 %, einer Säurezahl von 195 bis 198 mg KOH/g und einer Verseifungszahl von 198 - 202 mg KOH/g), 107,7 g Cyclohexandimethanol, 723,3 g Hydroxipivalinsäureneopentylglykolester, 17,2 g Ethylbutylpropandiol, 392,6 g Neopentylglykol und 1018,7 g Isophthalsäure mit Cyclohexan als Schleppmittel und 0,25 g Monobutylzinnoxidhydrat bis zu einer Säurezahl < 5,0 umgesetzt. Das Cyclohexan wurde abdestilliert und der Polyester bis zu einer Säurezahl von < 1,5 gefahren. Der Ansatz wurde auf etwa 100°C abgekühlt und mit Ethoxiethylpropionat auf 79,5 % angelöst. Das Polyesterdiol B weist ein Mₙ von 2352 (gemessen mit GPC gegen Polystyrol-Standard) und eine Glasünergangstemperatur (gemessen mit DSC) von - 16 °C auf. Die Viskosität einer 60 %igen Lösung in Ethoxiethylpropionent beträgt bei 23 °C 3,5 dPa.s.

### 4.2. Herstellung des Polyurethanharzes (A3)

In einem 5 l Reaktionsgefäß mit Rührer, Rückflußkühler wurde eine Mischung aus 728,9 g des Polyesterdiols B, 10,9 g 2-Butyl-2-ethylpropandiol-1,3, 47,9 g Dimethylolpropionsäure und 241,9 g Tetramethylxylylendiisocyanat auf eine Reaktionstemperatur von 115°C erhitzt, bis ein konstanter NCO-Wert des Gemisches erreicht war. Anschließend gab man pro Mol Diisocyanat die 2,2-fache Menge an Molen Trimethylolpropan hinzu und ließ abreagieren, bis der Isocyanatgehalt praktisch Null war. Das Gemisch wurde mit 500 g Butoxipropanol angelöst und auf einmal mit 23,9 g Dimethylethanolamin bei einer Temperatur von 100°C versetzt. Abschließend stellte man einen Festkörper von 60 % mit Butoxipropanol ein. Das Bindemittel weist eine OH-Zahl von 60 mgKOH/g und eine Säurezahl von 20,6 mg KOH/g sowie eine Viskosität (10:3 in N-Methylpyrrolidon) von 13,5 dPa.s auf. Das zahlenmittlere Molekulargewicht beträgt 4.500, das gewichtsmittlere Molekulargewicht liegt bei 19.500. Die Viskosität einer 50%igen Lösung des Polyurethans in Ethoxyethylpropionat beträgt 4,1 dPa·s (23°C).

### 5. Herstellung der Beschichtungsmittel der Beispiele 1 bis 14 und der Beschichtungsmittel des Vergleichsbeispiels V1

### 5.1. Herstellung der Komponente (I)

Aus den in Tabelle 1 angegebenen Bestandteilen wird durch Mischen mittels eines Rühreres (600 Umdrehungen pro Minute) die Komponente (I) hergestellt.

### 5.2. Herstellung der Komponente (II)

Aus den in Tabelle 2 angegebenen Bestandteilen wird durch Mischen mittels eines Rührers (600 Umdrehungen pro Minute) die Komponente (II) hergestellt.

### 5.3. Herstellung der Komponente (III)

Aus den in Tabelle 3 angegebenen Bestandteilen wird durch Mischen mittels eines Rührers (600 Umdrehungen pro Minute) die Komponente (III) hergestellt.

### 5.4. Herstellung der Beschichtungsmittel

Die Herstellung der Beschichtungsmittel der Beispiele 1 bis 5 erfolgte durch Mischen der in der Tabelle 4 angegebenen Komponenten mittels eines Rührers (600 Umdrehungen pro Minute), indem eine Mischung der Komponenten (I) und (II) zu der Komponente (III) zugegeben wurde.

Die Herstellung der Beschichtungsmittel des Beispiels 6 erfolgte durch Mischen der in der Tabelle 4 angegebenen Komponenten mittels eines Rührers ( 600 Umdrehungen pro Minute), indem die Komponenten (I) und (II) zunächst vorgemischt wurden und dann die Komponente (III) zu dieser Mischung gegeben wurde.

Die Herstellung der Beschichtungsmittel der Beispiele 7 bis 9 erfolgte analog zur Herstellung der Beschichtungsmittel der Beispiele 2, 3 und 6 , allerdings mit dem Unterschied, daß die in der Tabelle 4 angegebenen Komponenten per Hand, d.h. ohne Einsatz eines Rührers, gemischt wurden.

Die Herstellung der Beschichtungsmittel des Beispiels 10 erfolgte durch Mischen der in der Tabelle 4 angegebenen Komponenten mittels eines Rührers (600 Umdrehungen pro Minute), indem die Komponente (III) vorgelegt wurde, dann die Komponente (I) und anschließend die Komponente (II) eingerührt wurde.

Die Herstellung der Beschichtungsmittel der Beispiele 11 bis 14 erfolgte durch Mischen der in der Tabelle 5 angegebenen Komponenten mittels eines Rührers (600 Umdrehungen pro Minute), indem die Komponenten (I) und (II) vorgemischt und dann in Komponente (III) eingerührt wurden.

Die Herstellung des Beschichtungsmittels des Vergleichsbeispiels 1 erfolgte analog zur Herstellung des Beschichtungsmittels des Beispiels 1 mit dem Unterschied, daß anstelle des Acrylatharzes (A1) das Acrylatharz (VA1) eingesetzt wurde und daß keine Komponente (III) zugesetzt wurde.

### 6. Herstellung des Beschichtungsmittels des Vergleichsbeispiels V2

Es wurden entsprechend der Lehre der EP-A-368 499 und in Anlehnung an die Beispiele 2, 7, 8, 13 und 14 der EP-A-368 499 folgende Beispiele nachgearbeitet:

### 6.1. Herstellung einer Lackverdünnung

Analog zu Beispiel 2 der EP-A-368 499 wurden 0,5 Gew.-Teile p-Toluolsulfonsäure in 99,5 Gew.-Teilen entionisiertem Wasser gelöst.

### 6.2. Herstellung einer Komponente 1

Aus den folgenden Bestandteilen wurde eine Komponente 1 durch Mischen hergestellt:

| | |
|---|---|
| 65 Gew.-Teile | eines handelsüblichen Polypropylenglykols mit einem mittleren Molekulargewicht von 400 und einer OH-Zahl von ≈ 140 mg KOH/g (Handelsprodukt PPG-400 der Firma Union Carbide) |
| 35 Gew.-Teile | eines handelsüblichen Melaminformaldehydharzes (Handelsprodukt Cymel 303 der Firma Cyanamid) |
| 0,5 Gew.-Teile | eines handelsüblichen oberflächenaktiven Mittels (Handelsprodukt Additiv Byk 341 der Firma Byk) |
| 20 Gew.-Teile | Isopropanol |

Außerdem wurde die Komponente 1 noch nach dem in der Beschreibung der EP-A-368 499 in Spalte 6, Zeilen 45 bis 50 beschriebenen Verfahren hergestellt, indem zunächst das Polypropylenglykol, das Melaminformaldehydharz und das Isopropanol unter Rühren zu einer Mischung verarbeitet wurden. In diese Mischung wurde dann unter Rühren das oberflächenaktive Mittel eingearbeitet.

### 6.3 Herstellung einer Komponente 2

Aus den folgenden Bestandteilen wurde eine Komponente 2 hergestellt:

| | |
|---|---|
| 65 Gew.-Teile | Triethylenglykol mit einem theoretischen Molekulargewicht von 150 und einer theoretischen OH-Zahl von 748 |
| 35 Gew.-Teile | eines handelsüblichen Melaminformaldehydharzes (Handelsprodukt Cymel 303 der Firma Cyanamid) |
| 0,5 Gew.-Teile | eines handelsüblichen oberflächenaktiven Mittels (Handelsprodukt Additiv Byk 341 der Firma Byk) |
| 20 Gew.-Teile | Isopropanol |

Die Herstellung der Komponente 2 erfolgte analog zur Herstellung der Komponente 1 nach den dort beschriebenen 2 Verfahren.

### 6.4 Herstellung der Beschichtungsmittel 1 und 2

140,5 Gew.-Teile der Komponente 1 bzw. 140,5 Gew.-Teile der Komponente 2 wurden unter Rühren mit 100 Gew.-Teilen der Lackverdünnung vermischt.

Es ließen sich jedoch keine Klarlacke herstellen, da die para-Toluolsulfonsäure-Lösung ausflockte und das erhaltene Gemisch stark inhomogen war.

### 7.) Applikation der transparenten Deckbeschichtungszusammensetzungen und Prüfung der eingebrannten Lackfilme

Auf ein mit einer handelsüblichen Elektrotauchlackierung und einem handelsüblichen Füller beschichtetes phosphatiertes Stahlblech wird eine wasserverdünnbare, mit Aluminiumplättchen pigmentierte Basisbeschichtungszusammensetzung gemäß EP-A-279 813 so appliziert, daß eine Trockenfilmschichtdicke von 12 bis 15 µm erhalten wird. Die applizierte Basisbeschichtungszusammensetzung wird 10 Min. bei Raumtemperatur und 10 Min. bei 60°C getrocknet. Dann wird eine gemäß Punkt 6 erhaltene Deckbeschichtungszusammensetzung in 3 Spritzgängen mit 15 Min. Zwischenablüftzeit auf die Basisschicht gespritzt. Schließlich wird 60 Min. bei Raumtemperatur getrocknet und 30 Min. bei 60°C im Umluftofen eingebrannt. Die so erhaltenen mehrschichtigen Überzüge wurden mehreren Prüfungen unterzogen. Die Prüfergebnisse sind in den Tabellen 6 und 7 dargestellt.

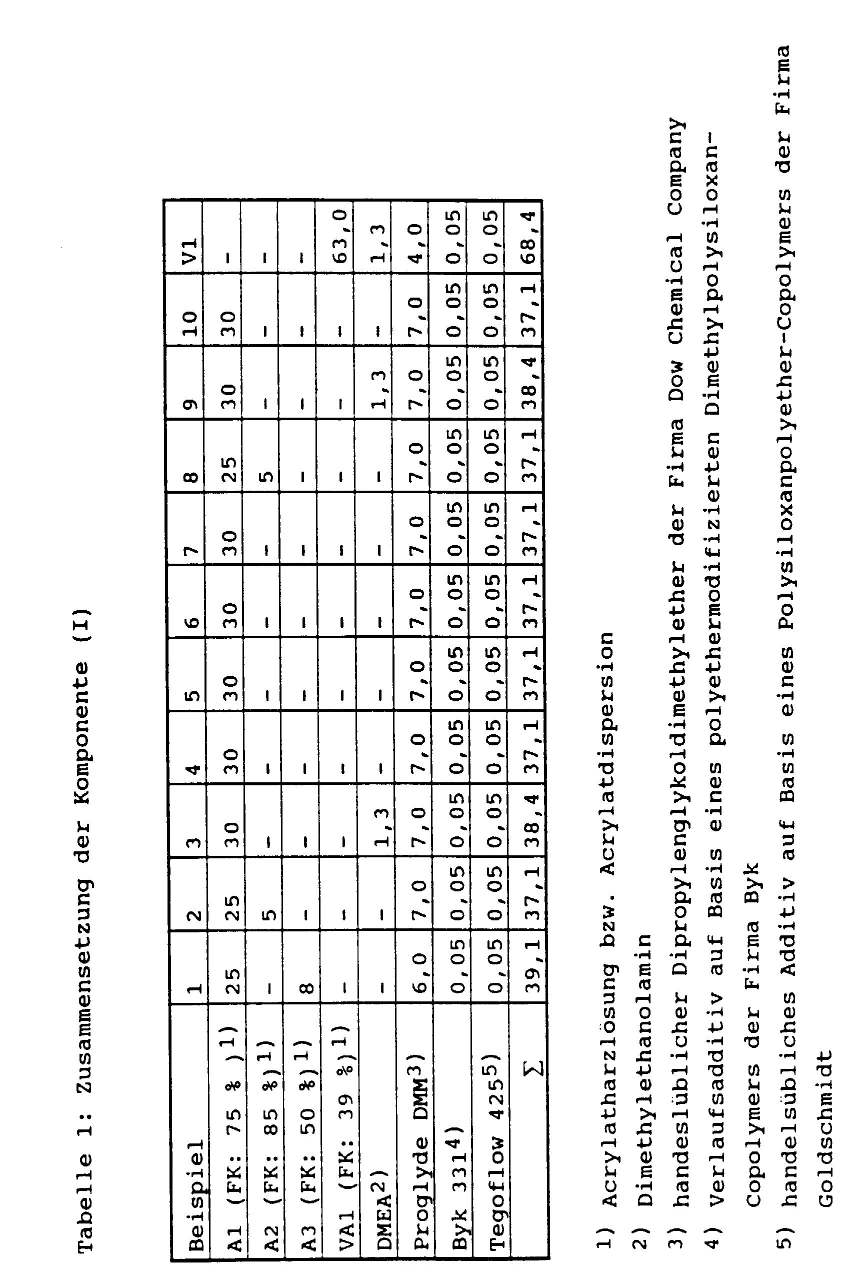

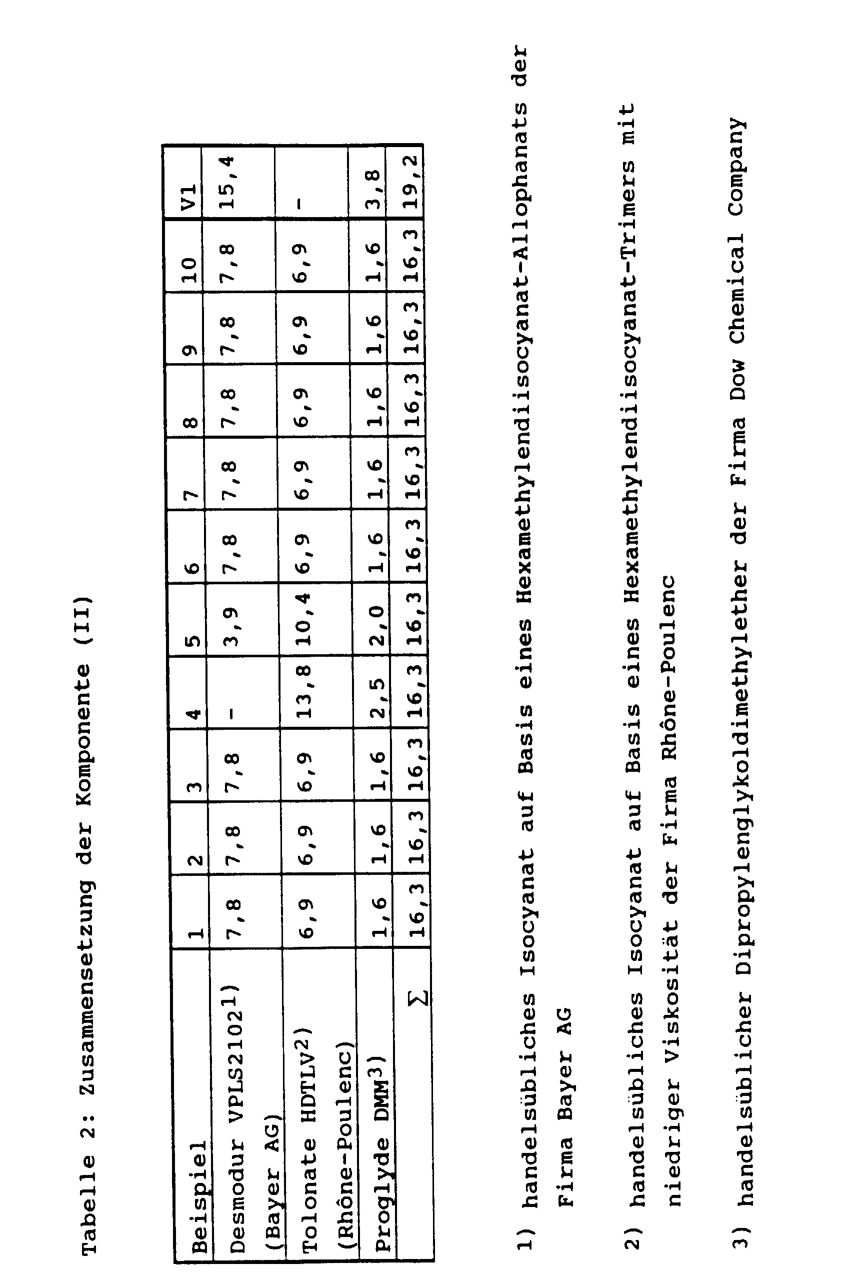

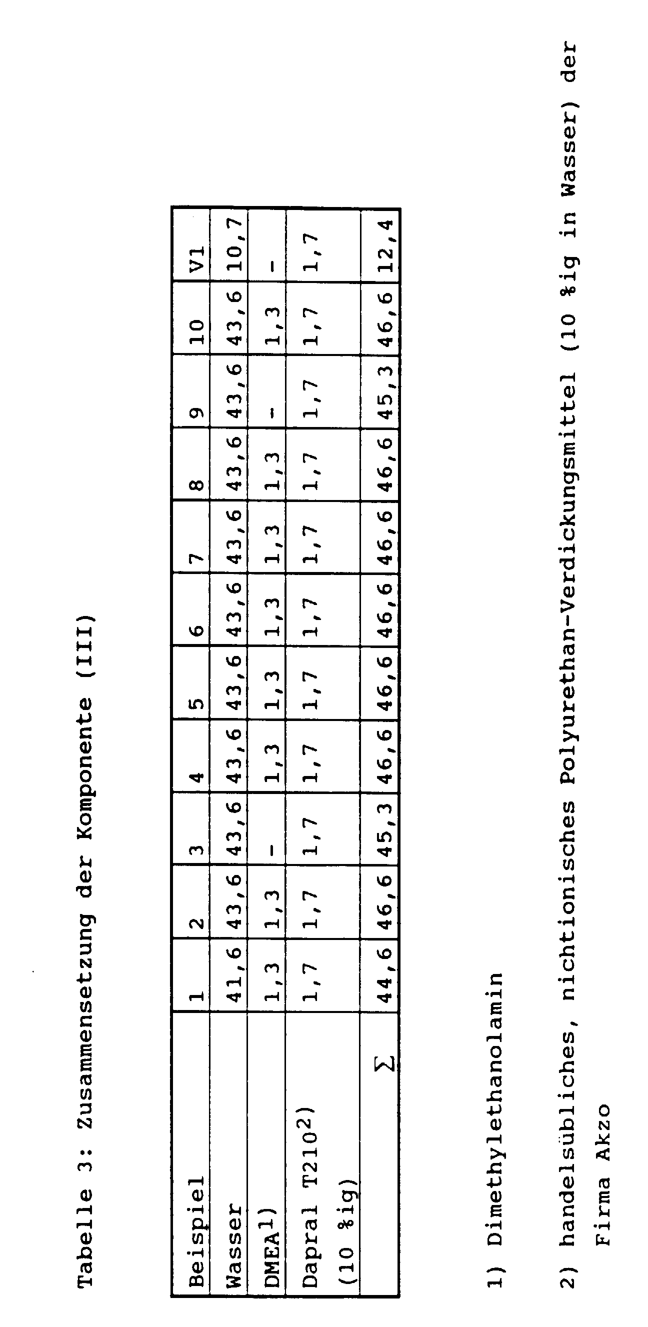

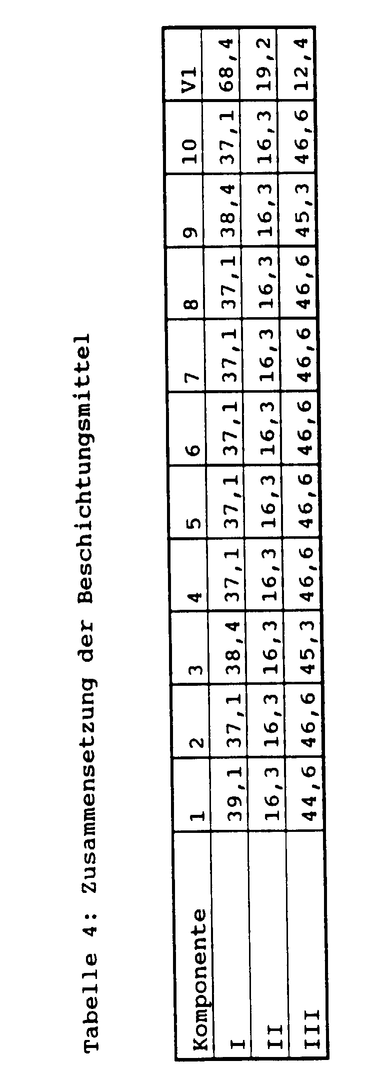

**Tabelle 5:**

| Zusammensetzung der Beschichtungsmittel der Beispiele 11 bis 14 | | | | | |
|---|---|---|---|---|---|
| | Beispiel | 11 | 12 | 13 | 14 |
| | Bindemittel A1 | 28,0 | 28,2 | 28,0 | 28,2 |
| | Proglyde DMM¹⁾ | 5,4 | 5,4 | 5,9 | 5,9 |
| | Methylisobutylketon | 0,5 | 0,5 | 0,5 | 0,5 |
| I | Butyldiglykolacetat | 0,5 | 0,5 | 0,7 | 0,7 |
| | Butylglykol | 0,5 | 0,5 | - | - |
| | Triton X 100²⁾ | 0,5 | 0,5 | 0,5 | 0,5 |
| | Byk 331³⁾ | 0,05 | 0,05 | 0,05 | 0,05 |
| | Tegoflow 425⁴⁾ | 0,05 | 0,05 | 0,05 | 0,05 |
| | Desmodur VPLS 2102⁵⁾ | 14,2 | 7,2 | 14,2 | 7,2 |
| II | Tolonate HDT LV⁶⁾ | - | 6,8 | - | 6,8 |
| | Proglyde DMM¹⁾ | 3,7 | 3,7 | 3,7 | 3,7 |
| | Wasser (deion.) | 43,8 | 43,8 | 43,6 | 43,6 |
| III | DMEA | 1,2 | 1,2 | 1,2 | 1,2 |
| | Dapral T210⁷⁾ (10 %ig) | 1,6 | 1,6 | 1,6 | 1,6 |

| | | | | | |
|---|---|---|---|---|---|
| ¹⁾ handeslüblicher Dipropylenglykoldimethylether der Firma Dow Chemical Company | | | | | |
| ²⁾ Aryl-Alkylpolyethylenetheralkohol der Firma Rhom and Haas | | | | | |
| ³⁾ handelsübliches Verlaufsadditiv auf Basis eines polyethermodifizierten Dimethylpolysiloxan-Copolymers der Firma Byk | | | | | |
| ⁴⁾ handelsübliches Additiv auf Basis eines Polysiloxanpolyether-copolymers der Firma Goldschmidt | | | | | |
| ⁵⁾ handelsübliches Isocyanat auf Basis eines Hexamethylendiisocyanat-Allophanats der Firma Bayer AG | | | | | |
| ⁶⁾ handelsübliches Isocyanat auf Basis eines Hexamethylendiisocyanat-Trimerisats der Firma Rhône-Poulenc | | | | | |
| ⁷⁾ nichtionisches Polyurethan-Verdickungsmittel (10 %ig in Wasser) der Firma Akzo | | | | | |

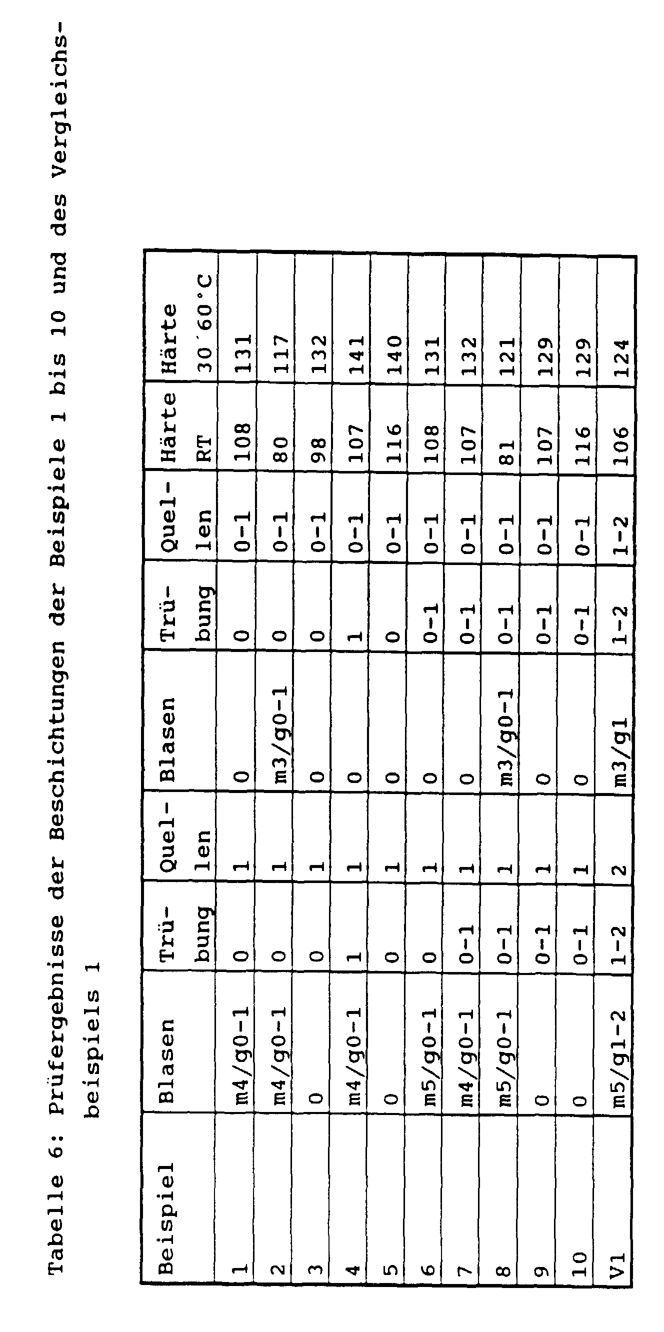

**Tabelle 7:**

| Prüfergebnisse der Beschichtungen der Beispiele 11 bis 14 | | | | |
|---|---|---|---|---|
| Beispiel | 11 | 12 | 13 | 14 |
| **KK-Test** Blasen **0 Tage** | 0 | 0 | 0 | 0 |
| Quellung | 2 | 2 | 2 | 2 |
| Bemerkung | - alle Filme zeigen eine feine Narbe und leichten Glanzverlust. | | | |
| | - Probe 3 ist optisch am Besten. | | | |
| Blasen **6 Tage** | m2 / g1 | m2 / g1 | m2 / g1 | m2 / g1 |
| Quellung | 3 | 3 | 3 | 3 |
| Bemerkung | - dunkeln nicht so stark ab wie der Stand . | | | |
| | - sehr feine Narbe und feine Blasen (stippenartig). | | | |
| Blasen **10 Tage** | m5 / g1 | m5 / g1 | m3-4 / g1 | m3-4 / g1 |
| Quellung | 3 | 3 | 3 | 3 |
| Bemerkung | - alle Filme sind stärker vermattet. | | | |
| **Regeneration** Blasen | m1-2 / g1 | m1-2 /g1 | m1 / g1 | m1 / g1 |
| Bemerkung | - die Farbtonänderung und der Glanzverlust sind fast wieder auf die Ausgangswerte zurück gegangen. | | | |
| **Wassersprühtest 0 Runde** Gitterschnitt | 0 | 0 | 0 | 0 |
| Kreuzschnitt | 1 | 1 | 1 | 1 |
| Bemerkung | - alle Filme zeigen einen guten Glanz und guten Verlauf. | | | |
| **2 Runden** Gitterschnitt | 1 | 1 | 1 | 1 |
| Kreuzschnitt | 1 B | 2-3 B | 1 B | 2 B |
| Bemerkung | - alle Filme zeigen noch einen guten Glanz. | | | |
| Blasen | 0 | 0 | 0 | 0 |
| Quellung | 2 | 2 | 2 | 2 |
| **5 Runden** Gitterschnitt | 0-1 | 1 | 0-1 | 0-1 |
| Kreuzschnitt | 5 mit Tesa | 5 mit Tesa | 0 mit Tesa | 4 mit Tesa |
| Bemerkung | - alle Filme zeigen noch einen guten Glanz. | | | |
| Blasen | 0 | 0 | 0 | 0 |
| Quellung | 3 | 3 | 3 | 3 |
| **Regeneration 24 h** Gitterschnitt | 0 | 0 | 0 | 0 |
| Kreuzschnitt | 0 mit Tesa | 0 mit Tesa | 0 mit Tesa | 0 mit Tesa |
| Bemerkung | - alle Filme sind vom Verlauf und Glanz genau wie der Stand. | | | |

### Zusammenfassung der Prüfergebnisse

Die Prüfergebnisse (Beispiele 1 - 10) in Tabelle 6 zeigen deutlich, daß die organisch vorgemischten Komponenten (I) und (II) bessere technologische Eigenschaften und Feuchtklimabelastung erzeugen als das Mischen einer wäßrigen Komponente (I) mit organischem Polyisocyanat (Vergleichsbeispiel V1 analog zur EP-B-0358 979).

Es treten weniger Blasen, Trübungen und Quellung auf als bei den in der EP-B-0358 979 beschriebenen Systemen.

Darüberhinaus zeigen die Ergebnisse in Tabelle 7, daß die Verwendung von Butylglykol schlechtere Schwitzwasser- und Konstantklima-Tests hervorruft. Die beiden Varianten ohne Butylglykol fallen zudem auch optisch (Verlauf, Decklackstand) besser auf.

## Patentansprüche

1. Aus mindestens drei Komponenten bestehendes Beschichtungsmittel auf der Basis eines in einem oder mehreren organischen Lösemitteln gelösten oder dispergierten, hydroxyl- und carboxylgruppenhaltigen Polymers und eines isocyanatgruppenhaltigen Vernetzungsmittels, dadurch gekennzeichnet, daß
1.) die Komponente (I) als Bindemittel (A)
(A1) mindestens ein in einem oder mehreren organischen, wasserverdünnbaren Lösemitteln gelöstes oder dispergiertes, hydroxyl- und carboxylgruppenhaltiges Acrylatcopolymerisat (A1) mit einem zahlenmittleren Molekulargewicht zwischen 1.000 und 30.000, einer OH-Zahl von 40 bis 200 mgKOH/g und einer Säurezahl von 5 bis 150 mgKOH/g und/oder
(A2) mindestens ein in einem oder mehreren organischen, wasserverdünnbaren Lösemitteln gelöstes oder dispergiertes, hydroxyl- und carboxylgruppenhaltiges Polyesterharz (A2) mit einem zahlenmittleren Molekulargewicht zwischen 1.000 und 30.000, einer OH-Zahl von 30 bis 250 mgKOH/g und einer Säurezahl von 5 bis 150 mgKOH/g und/oder
(A3) mindestens ein in einem oder mehreren organischen, wasserverdünnbaren Lösemitteln gelöstes oder dispergiertes, hydroxyl- und carboxylgruppenhaltiges Polyurethanharz (A3) mit einem zahlenmittleren Molekulargewicht zwischen 1.000 und 30.000, einer OH-Zahl von 20 bis 200 mgKOH/g und einer Säurezahl von 5 bis 150 mgKOH/g und
(A4) ggf. mindestens ein weiteres Bindemittel
enthält, wobei die Bindemittel (A1) und/oder (A2) und/oder (A3) und/oder (A4) so ausgewählt werden, daß eine 50 %ige Lösung des Bindemittels (A) in Ethoxyethylpropionat bei 23°C eine Viskosität von <= 2,5 dPa.s aufweist,
2.) die Komponente (II) als Vernetzungsmittel (F) mindestens ein in einem oder mehreren organischen Lösemitteln gelöstes oder dispergiertes, nichtblockiertes Di- und/oder Polyisocyanat (F1) und ggf. mindestens ein weiteres Vernetzungsmittel, bestehend aus mindestens einer Epoxidverbindung (F2) mit mindestens zwei Epoxidgruppen pro Molekül und/oder ggf. mindestens einem Aminoplastharz (F3), enthält und
3.) die Komponente (III) im wesentlichen bindemittel frei ist und Wasser enthält.

2. Beschichtungsmittel nach Anspruch 1, dadurch gekennzeichnet, daß
1.) als Komponente (A1) Acrylatcopolymerisate eingesetzt werden, die als 50 %ige Lösung in Ethoxyethylpropionat bei 23°C eine Viskosität <= 3,0 dPa.s, bevorzugt eine Viskosität <= 2,0 dPa.s, aufweisen und/oder
2.) als Komponente (A2) Polyesterharze eingesetzt werden, die als 50 %ige Lösung in Ethoxyethylpropionat bei 23°C eine Viskosität <= 2,0 dPa.s, bevorzugt eine Viskosität <= 1,0 dPa.s, aufweisen und/oder
3.) als Komponente (A3) Polyurethanharze eingesetzt werden, die als 50 %ige Lösung in Ethoxyethylpropionat bei 23°C eine Viskosität <= 5,0 dPa.s, bevorzugt eine Viskosität <= 3,5 dPa.s, aufweisen und/oder
4.) daß die Bindemittel (A1) und/oder (A2) und/oder (A3) und/oder (A4) so ausgewählt werden, daß eine 50 %ige Lösung des Bindemittels (A) in Ethoxyethylpropionat bei 23°C eine Viskosität von ≤ 2,0 dPa·s aufweist.

3. Beschichtungsmittel nach Anspruch 1 oder 2, dadurch gekennzeichnet, daß die Komponente (I) als Bindemittel (A)
(A1) mindestens 50 Gew.-%, bevorzugt mindestens 80 Gew.-% mindestens eines Acrylatcopolymerisats,
(A2) 0 bis 30 Gew.-%, bevorzugt 5 bis 20 Gew.-% mindestens eines Polyesters (A2) und
(A3) 0 bis 30 Gew.-%, bevorzugt 5 bis 20 Gew.-% mindestens eines Polyurethanharzes (A3)
(A4) 0 bis 10 Gew.-%, bevorzugt 0 bis 5 Gew.-% mindestens eines weiteren Bindemittels (A4)
enthält, wobei die Summe der Gewichtsanteile der Komponenten (A1) bis (A4) jeweils 100 Gew.-% beträgt.

4. Beschichtungsmittel nach einem der Ansprüche 1 bis 3, dadurch gekennzeichnet, daß das Acrylatcopolymerisat (A1) erhältlich ist, indem in einem organischen Lösemittel oder einem Lösemittelgemisch und in Gegenwart mindestens eines Polymerisationsinitiators
a1) ein von (a2), (a3), (a4), (a5) und (a6) verschiedener, mit (a2), (a3), (a4), (a5) und (a6) copolymerisierbarer, im wesentlichen carboxylgruppenfreier (Meth)acrylsäureester oder ein Gemisch aus solchen Monomeren,
a2) ein mit (a1), (a3), (a4), (a5) und (a6) copolymerisierbares, von (a5) verschiedenes, ethylenisch ungesättigtes Monomer, das mindestens eine Hydroxylgruppe pro Molekül trägt und im wesentlichen carboxylgruppenfrei ist, oder ein Gemisch aus solchen Monomeren,
a3) ein mindestens eine Carboxylgruppe pro Molekül tragendes, mit (a1), (a2), (a4), (a5) und (a6) copolymerisierbares, ethylenisch ungesättigtes Monomer oder ein Gemisch aus solchen Monomeren und
a4) ggf. ein oder mehrere Vinylester, von in α-Stellung verzweigten Monocarbonsäuren mit 5 bis 18 C-Atomen je Molekül und/oder
a5) ggf.mindestens ein Umsetzungsprodukt aus Acrylsäure und/oder Methacrylsäure mit dem Glycidylester einer in α-Stellung verzweigten Monocarbonsäure mit 5 bis 18 C-Atomen je Molekül oder anstelle des Umsetzungsproduktes eine äquivalente Menge Acryl- und/oder Methacrylsäure, die dann während oder nach der Polymerisationsreaktion mit dem Glycidylester einer in α-Stellung verzweigten Monocarbonsäure mit 5 bis 18 C-Atomen je Molekül umgesetzt wird,
a6) ggf. ein mit (a1), (a2), (a3), (a4), und (a5) copolymerisierbares, von (a1), (a2), (a4) und (a5) verschiedenes, im wesentlichen carboxylgruppenfreies, ethylenisch ungesättigtes Monomer oder ein Gemisch aus solchen Monomeren
polymerisiert werden, wobei (a1), (a2), (a3), (a4), (a5) und (a6) in Art und Menge so ausgewählt werden, daß das Polyacrylatharz (A1) die gewünschte OH-Zahl, Säurezahl und das gewünschte Molekulargewicht aufweist.

5. Beschichtungsmittel nach einem der Ansprüche 1 bis 4, dadurch gekennzeichnet, daß das Polyesterharz (A2) erhältlich ist durch Umsetzung von
p1) Polycarbonsäuren oder deren veresterungsfähigen Derivaten, ggf. zusammen mit Monocarbonsäuren,
p2) Polyolen, ggf. zusammen mit Monoolen,
p3) ggf. weiteren Komponenten, die eine gegenüber den funktionellen Gruppen des Polyesters reaktive Gruppe aufweisen und
p4) ggf. einer Komponente, die außer einer gegenüber den funktionellen Gruppen des Polyesters (A2) reaktiven Gruppe noch eine terziäre Aminogruppe aufweist.

6. Beschichtungsmittel nach einem der Ansprüche 1 bis 5, dadurch gekennzeichnet, daß das Polyesterethanharz erhältlich ist, indem eine Alkoholkomponente eingesetzt wird, die zumindest zu einem gewissen Anteil aus
u₁) mindestens einem Diol der Formel (I) 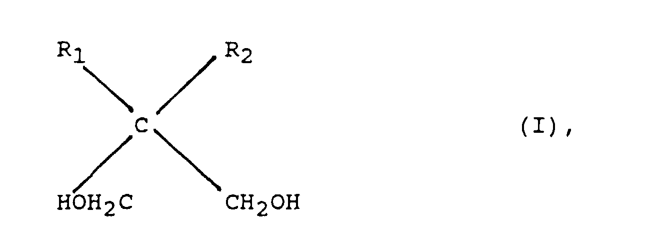 in der R₁ und R₂ jeweils einen gleichen oder verschiedenen Rest darstellen und für einen Alkylrest mit 1 bis 18 C-Atomen, einen Arylrest oder einen cycloaliphatischen Rest stehen, mit der Maßgabe, daß R₁ und/oder R₂ nicht Methyl sein darf, und/oder
u₂) mindestens einem Diol der Formel (II) 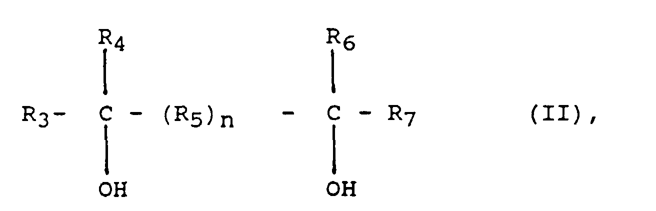 in der R₃, R₄, R₆ und R₇ jeweils gleiche oder verschiedene Reste darstellen und für einen Alkylrest mit 1 bis 6 C-Atomen, einen Cycloalkylrest oder einen Arylrest stehen und R₅ einen Alkylrest mit 1 bis 6 C-Atomen, einen Arylrest oder einen ungesättigten Alkylrest mit 1 bis 6 C-Atomen darstellt, und n entweder 0 oder 1 ist,
besteht und/oder indem Diisocyanate der allgemeinen Formel (III) eingesetzt werden: 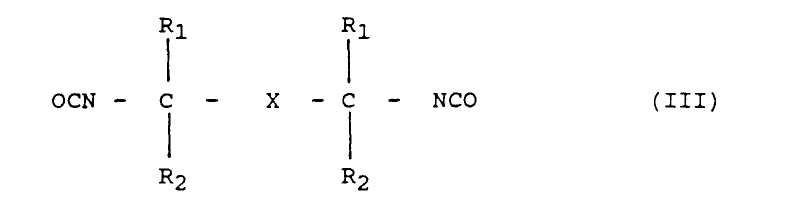 wobei X für einen zweiwertigen, aromatischen Kohlenwasserstoffrest, vorzugsweise für einen ggf. Halogen-, Methyl- oder Methoxy-substituierten Naphthylen-, Diphenylen- oder 1,2-, 1,3- oder 1,4-Phenylenrest, besonders bevorzugt für einen 1,3-Phenylenrest und R₁ und R₂ für einen Alkylrest mit 1 - 4 C-Atomen, bevorzugt für einen Methylrest, stehen.

7. Beschichtungsmittel nach einem der Ansprüche 1 bis 6, dadurch gekennzeichnet, daß die Komponente (II) als Vernetzungsmittel
(F1) mindestens 70 Gew.-%, bevorzugt 80 bis 100 Gew.-% eines unblockierten Di- und/oder Polyisocyanates (F1),
(F2) 0 bis 30 Gew.-%, bevorzugt 2 bis 20 Gew.-%, mindestens einer Epoxidverbindung (F2) mit mindestens 2 Epoxidgruppen pro Molekül und
(F3) 0 bis 30 Gew.-%, bevorzugt 2 bis 20 Gew.-%, mindestens eines Aminoplastharzes (F3)
enthält, jeweils bezogen auf das Gesamtgewicht des Vernetzungsmittels (F).

8. Beschichtungsmttel nach einem der Ansprüche 1 bis 7, dadurch gekennzeichnet, daß die Komponente (I) aus
(A) 20 bis 90 Gew.-%, bevorzugt 35 bis 80 Gew.-%, des Bindemittels (A),
(B) 0 bis 60 Gew.-%, bevorzugt 5 bis 50 Gew.-% mindestens eines Pigments und/oder Füllstoffs,
(C) 5 bis 50 Gew.-%, bevorzugt 10 bis 40 Gew.-%, mindestens eines organischen, wasserverdünnbaren Lösemittels und
(D) 0 bis 20 Gew.-%, bevorzugt 2 bis 10 Gew.-%, mindestens eines Neutralisationsmittels
(E) 0 bis 20 Gew.-%, bevorzugt 2 bis 10 Gew.-%, mindestens eines üblichen Hilfs- und/oder Zusatzstoffes
besteht, wobei die Summe der Gewichtsanteile der Komponenten (A) bis (E) jeweils 100 Gew.-% beträgt, und die Komponente (II) aus
(F) 50 bis 100 Gew.-%, bevorzugt 60 bis 90 Gew.-%, mindestens eines Vernetzungsmittels (F),
(G) 0 bis 50 Gew.-%, bevorzugt 10 bis 40 Gew.-%, mindestens eines organischen, wassermischbaren Lösemittels und
(H) 0 bis 20 Gew.-%, bevorzugt 0 bis 10 Gew.-% mindestens eines üblichen Hilfs- und/oder Zusatzstoffes,
besteht, wobei die Summe der Gewichtsanteile der Komponenten (F) bis (H) jeweils 100 Gew.-% beträgt, und die Komponente (III) aus
(I) 80 bis 100 Gew.-%, bevorzugt 80 bis 95 Gew.-% Wasser,
(J) 0 bis 20 Gew.-, bevorzugt 2 bis 10 Gew.-%, mindestens eines Neutralisationsmittels,
(K) 0 bis 20 Gew.-%, bevorzugt 2 bis 10 Gew.-%, mindestens eines üblichen Hilfs- und/oder Zusatzstoffes und
(L) 0 bis 20 Gew.-%, bevorzugt 0 bis 10 Gew.-%, mindestens eines Emulsionspolymerisats
besteht, wobei die Summe der Gewichtsanteile der Komponenten (I) bis (L) jeweils 100 Gew.-% beträgt.

9. Beschichtungsmittel nach einem der Ansprüche 1 bis 8, dadurch gekennzeichnet, die Komponenten (I) und (II) in solchen Mengen enthalten sind, daß das Äquivalentverhältnis von Hydroxylgruppen des Bindemittels (A) zu den vernetzenden Gruppen des Vernetzungsmittels (F) zwischen 1 : 2 und 2 : 1, bevorzugt zwischen 1 : 1,2 und 1 : 1,5 , liegt.

10. Verfahren zur Herstellung der Beschichtungsmittel nach einem der Ansprüche 1 bis 9, dadurch gekennzeichnet, daß zunächst eine Lösung des Bindemittels (A) in dem organischen, wasserverdünnbaren Lösemittel hergestellt wird, die weiteren Bestandteile der Komponente (I) in dieser Bindemittellösung dispergiert werden und entweder
(i) die so erhaltene Komponente (I) dann mit den Komponenten (II) und ggf. (IV), die aus einem Teil oder der gesamten Menge der in den Beschichtungsmittel eingesetzten Hilfs- und Zusatzstoffe besteht, gemischt und anschließend entweder die Komponente (III)zugegeben wird oder die erhaltene Mischung zu der Komponente (III) zugegeben wird
oder
(ii) die so erhaltene Komponente (I) zu der Komponente (III) oder die Komponente (III) zu der so erhaltenen Komponente (I) zugegeben wird und anschließend die Komponenten (II) und ggf. (IV) zugegeben werden.

11. Verwendung der Beschichtungsmittel nach einem der Ansprüche 1 bis 9 in der Reparaturlackierung, insbesondere in der Autoreparaturlackierung.

12. Verwendung der Beschichtungsmittel nach einem der Ansprüche 1 bis 9 zur Beschichtung von Kunststoffen.

13. Verwendung der Beschichtungsmittel nach einem der Ansprüche 1 bis 9 als Decklack und/oder Füller.

## Claims

1. Coating composition comprising at least three components which is based on a hydroxyl- and carboxyl-containing polymer which is dissolved or dispersed in one or more organic solvents, and on an isocyanate-group-containing crosslinking agent, characterized in that
1.) component (I) contains as binder (A)
(A1) at least one acrylate copolymer (A1) which is dissolved or dispersed in one or more organic, water-dilutable solvents and contains hydroxyl and carboxyl groups, having a number-average molecular weight of between 1000 and 30,000, an OH number of from 40 to 200 mg of KOH/g and an acid number of from 5 to 150 mg of KOH/g, and/or
(A2) at least one polyester resin (A2) which is dissolved or dispersed in one or more organic, water-dilutable solvents and contains hydroxyl and carboxyl groups, having a number-average molecular weight of between 1000 and 30,000, an OH number of from 30 to 250 mg of KOH/g and an acid number of from 5 to 150 mg of KOH/g, and/or
(A3) at least one polyurethane resin (A3) which is dissolved or dispersed in one or more organic, water-dilutable solvents and contains hydroxyl and carboxyl groups, having a number-average molecular weight of between 1000 and 30,000, an OH number of from 20 to 200 mg of KOH/g and an acid number of from 5 to 150 mg of KOH/g, and
(A4) if desired, at least one further binder,
the binders (A1) and/or (A2) and/or (A3) and/or (A4) being selected such that a 50% strength solution of the binder (A) in ethoxyethyl propionate has a viscosity of <= 2.5 dPa.s at 23°C,
2.) component (II) comprises as crosslinking agent (F) at least one nonblocked di- and/or polyisocyanate (F1) which is dissolved or dispersed in one or more organic solvents, and, optionally, at least one further crosslinking agent consisting of at least one epoxide compound (F2) having at least two epoxide groups per molecule and/or, optionally, at least one amino resin (F3), and
3.) component (III) is essentially binder-free and comprises water.

2. Coating composition according to Claim 1, characterized in that
1.) as component (A1), acrylate copolymers are employed which, as a 50% strength solution in ethoxyethyl propionate, have a viscosity of <= 3.0 dPa.s, preferably a viscosity of <= 2.0 dPa.s, at 23°C, and/or
2.) as component (A2), polyester resins are employed which, as a 50% strength solution in ethoxyethyl propionate, have a viscosity of <2.0 dPa.s, preferably a viscosity of <= 1.0 dPa.s, at 23%, and/or
3.) as component (A3), polyurethane resins are employed which, as a 50% strength solution in ethoxyethyl propionate, have a viscosity of <= 5.0 dPa.s, preferably a viscosity of <= 3.5 dPa.s, at 23°C, and/or
4.) in that the binders (A1) and/or (A2) and/or (A3) and/or (A4) are selected such that a 50% strength solution of the binder (A) in ethoxyethyl propionate has a viscosity of ≤ 2.0 dPa.s at 23°C.

3. Coating composition according to Claim 1 or 2, characterized in that component (I) comprises as binder (A)
(A1) at least 50% by weight, preferably at least 80% by weight of at least one acrylate copolymer,
(A2) from 0 to 30% by weight, preferably from 5 to 20% by weight of at least one polyester (A2), and
(A3) from 0 to 30% by weight, preferably from 5 to 20% by weight of at least one polyurethane resin (A3)
(A4) from 0 to 10% by weight, preferably from 0 to 5% by weight of at least one further binder (A4),
the sum of the proportions by weight of components (A1) to (A4) being in each case 100% by weight.

4. Coating composition according to one of Claims 1 to 3, characterized in that the acrylate copolymer (A1) is obtainable by polymerizing, in an organic solvent or a solvent mixture, and in the presence of at least one polymerization initiator,
a1) an essentially carboxyl-free (meth)acrylic ester which is different from (a2) , (a3), (a4), (a5), and (a6) and is copolymerizable with (a2), (a3), (a4), (a5), and (a6), or a mixture of such monomers,
a2) an ethylenically unsaturated monomer which carries at least one hydroxyl group per molecule and is essentially free from carboxyl groups, which is copolymerizable with (a1), (a3) , (a4), (a5), and (a6) and is different from (a5), or a mixture of such monomers,
a3) an ethylenically unsaturated monomer which carries at least one carboxyl group per molecule and is copolymerizable with (a1), (a2), (a4), (a5), and (a6), or a mixture of such monomers, and
a4) if desired, one or more vinyl esters of α-branched monocarboxylic acids having 5 to 18 carbon atoms per molecule, and/or
a5) if desired, at least one reaction product of acrylic acid and/or methacrylic acid with the glycidyl ester of an α-branched monocarboxylic acid having 5 to 18 carbon atoms per molecule or, instead of the reaction product, an equivalent quantity of acrylic and/or methacrylic acid, which is then reacted, during or after the polymerization reaction, with the glycidyl ester of an α-branched monocarboxylic acid having 5 to 18 carbon atoms per molecule,
a6) if desired, an essentially carboxyl-free, ethylenically unsaturated monomer which is copolymerizable with (a1), (a2) , (a3), (a4), and (a6) and is different from (a1), (a2), (a4) and (a5), or a mixture of such monomers,
(a1), (a2), (a3), (a4), (a5), and (a6) being selected in nature and quantity such that the polyacrylate resin (A1) has the desired OH number, acid number and the desired molecular weight.

5. Coating composition according to one of Claims 1 to 4, characterized in that the polyester resin (A2) is obtainable by reacting
p1) polycarboxylic acids or esterifiable derivatives thereof, together if desired with monocarboxylic acids,
p2) polyols, together if desired with monools,
p3) if desired, further components which have a group which is reactive towards the functional groups of the polyester, and
p4) if desired, a component which, in addition to a group which is reactive towards the functional groups of the polyester (A2), has a tertiary amino group as well.

6. Coating composition according to one of Claims 1 to 5, characterized in that the polyester ethane [sic] resin is obtainable by employing an alcohol component which consists, at least in a certain proportion, of
u₁) at least one diol of the formula (I) 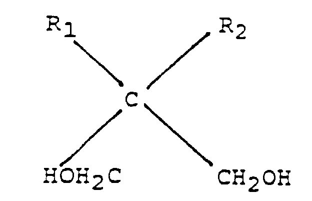 in which R₁ and R₂ are each an identical or different radical and are an alkyl radical of 1 to 18 carbon atoms, an aryl radical or a cycloaliphatic radical, with the proviso that R₁ and/or R₂ may not be methyl, and/or
u₂) at least one diol of the formula (II) 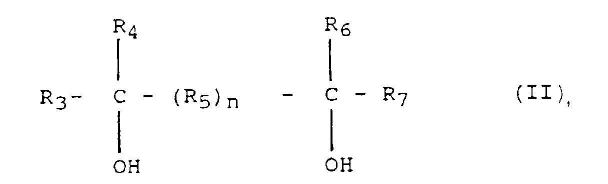 in which R₃, R₄, R₆ and R₇ are each identical or different radicals and are an alkyl radical of 1 to 6 carbon atoms, a cycloalkyl radical or an aryl radical, and R₅ is an alkyl radical of 1 to 6 carbon atoms, an aryl radical or an unsaturated alkyl radical of 1 to 6 carbon atoms, and n is either 0 or 1,
and/or by employing diisocyanates of the general formula (III): 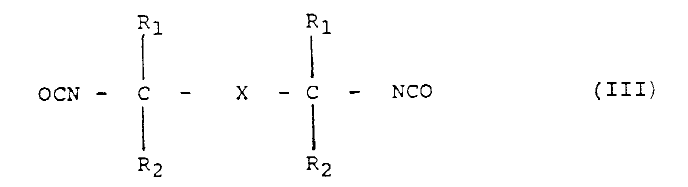 in which X is a divalent, aromatic hydrocarbon radical, preferably an optionally halogen, methyl- or methoxy-substituted naphthylene, diphenylene or 1,2-, 1,3- or 1,4-phenylene radical, particularly preferably a 1,3-phenylene radical, and R₁ and R₂ are an alkyl radical of 1-4 carbon atoms, preferably a methyl radical.

7. Coating composition according to one of Claims 1 to 6, characterized in that component (II) comprises, as crosslinking agent,
(F1) at least 70% by weight, preferably from 80 to 100% by weight, of a nonblocked di- and/or polyisocyanate (F1),
(F2) from 0 to 30% by weight, preferably from 2 to 20% by weight, of at least one epoxide compound (F2) having at least 2 epoxide groups per molecule, and
(F3) from 0 to 30% by weight, preferably from 2 to 20% by weight, of at least one amino resin (F3),
based in each case on the overall weight of the crosslinking agent (F).

8. Coating composition according to one of Claims 1 to 7, characterized in that component (I) consists of
(A) from 20 to 90% by weight, preferably from 35 to 80% by weight, of the binder (A),
(B) from 0 to 60% by weight, preferably from 5 to 50% by weight of at least one pigment and/or filler,
(C) from 5 to 50% by weight, preferably from 10 to 40% by weight, of at least one organic, water-dilutable solvent, and
(D) from 0 to 20% by weight, preferably from 2 to 10% by weight, of at least one neutralizing agent
(E) from 0 to 20% by weight, preferably from 2 to 10% by weight, of at least one customary auxiliary and/or additive,
the sum of the proportions by weight of components (A) to (E) being in each case 100% by weight, and component (II) consists of
(F) from 50 to 100% by weight, preferably from 60 to 90% by weight, of at least one crosslinking agent (F),
(G) from 0 to 50% by weight, preferably from 10 to 40% by weight, of at least one organic, water-miscible solvent, and
(H) from 0 to 20% by weight, preferably from 0 to 10% by weight of at least one customary auxiliary and/or additive,
the sum of the proportions by weight of components (F) to (H) being in each case 100% by weight, and component (III) consists of
(I) from 80 to 100% by weight, preferably from 80 to 95% by weight of water,
(J) from 0 to 20 [lacuna] by weight, preferably from 2 to 10% by weight, of at least one neutralizing agent,
(K) from 0 to 20% by weight, preferably from 2 to 10% by weight, of at least one customary auxiliary and/or additive, and
(L) from 0 to 20% by weight, preferably from 0 to 10% by weight, of at least one emulsion polymer,
the sum of the proportions by weight of components (I) to (L) being in each case 100% by weight.

9. Coating composition according to one of Claims 1 to 8, characterized in that components (I) and (II) are present in quantities such that the ratio of equivalents of hydroxyl groups of the binder (A) to the crosslinking groups of the crosslinking agent (F) is between 1:2 and 2:1, preferably between 1:1.2 and 1:1.5.

10. Process for the preparation of the coating compositions according to one of Claims 1 to 9, characterized in that first of all a solution of the binder (A) is prepared in the organic, water-dilutable solvent, the further constituents of component (I) are dispersed in this binder solution, and either
(i) the resulting component (I) is then mixed with the components (II) and, if appropriate (IV), which consists of some or all of the auxiliaries and additives employed in the coating composition, and subsequently either component (III) is added or the resulting mixture is added to component (III)
or
(ii) the resulting component (I) is added to component (III) or component (III) is added to the resulting component (I) and subsequently the components (II) and, if appropriate, (IV) are added.

11. Use of the coating compositions according to one of Claims 1 to 9 in repair coating, especially in automotive refinishing.

12. Use of the coating compositions according to one of Claims 1 to 9 for the coating of plastics.

13. Use of the coating compositions according to one of Claims 1 to 9 as topcoat and/or filler.

## Revendications

1. Composition de revêtement comprenant au moins trois composants, à base d'un polymère renfermant des groupes hydroxy et carboxy et dissous ou dispersé dans un ou plusieurs solvants organiques, et d'un agent de réticulation renfermant des groupes isocyanate, caractérisée en ce que
1.) le composant (I) contient en tant que liant (A)
(A1) au moins un copolymère d'acrylate (A1) renfermant des groupes hydroxy et carboxy et dissous ou dispersé dans un ou plusieurs solvants organiques diluables à l'eau, ayant un poids moléculaire moyen en nombre compris entre 1 000 et 30 000, un indice OH de 40 à 200 mg KOH/g et un indice d'acide de 5 à 150 mg KOH/g et/ou
(A2) au moins une résine de polyester (A2) renfermant des groupes hydroxy et carboxy et dissoute ou dispersée dans un ou plusieurs solvants organiques diluables à l'eau, ayant un poids moléculaire moyen en nombre compris entre 1 000 et 30 000, un indice OH de 30 à 250 mg KOH/g et un indice d'acide de 5 à 150 mg KOH/g et/ou
(A3) au moins une résine de polyuréthanne (A3) renfermant des groupes hydroxy et carboxy et dissoute ou dispersée dans un ou plusieurs solvants organiques diluables à l'eau, ayant un poids moléculaire moyen en nombre compris entre 1 000 et 30 000, un indice OH de 20 à 200 mg KOH/g et un indice d'acide de 5 à 150 mg KOH/g et
(A4) éventuellement au moins un liant supplémentaire
les liants (A1) et/ou (A2) et/ou (A3) et/ou (A4) étant choisis de telle sorte qu'une solution à 50% du liant (A) dans du propionate d'éthoxyéthyle présente, à 23°C, une viscosité ≤ 2,5 dPa.s,
2.) le composant (II) contient, en tant qu'agent de réticulation (F) , au moins un di- et/ou polyisocyanate (F1) non bloqué, dissous ou dispersé dans un ou plusieurs solvants organiques, et éventuellement au moins un agent de réticulation supplémentaire, comprenant au moins un composé époxyde (F2) ayant au moins deux groupes époxy par molécule et/ou éventuellement au moins une résine aminoplaste (F3), et
3.) le composant (III) est essentiellement exempt de liant et contient de l'eau.

2. Composition de revêtement selon la revendication 1, caractérisée en ce que
1.) on utilise, en tant que composant (A1), des copolymères d'acrylate qui présentent, en tant que solution à 50% dans du propionate d'éthoxyéthyle à 23°C, une viscosité ≤ 3,0 dPa.s, de préférence une viscosité ≤ 2,0 dPa.s, et/ou
2.) on utilise, en tant que composant (A2), des résines de polyester qui présentent, en tant que solution à 50% dans du propionate d'éthoxyéthyle à 23°C, une viscosité ≤ 2,0 dPa.s, de préférence une viscosité ≤ 1,0 dPa.s, et/ou
3.) on utilise, en tant que composant (A3), des résines de polyuréthanne qui présentent, en tant que solution à 50% dans du propionate d'éthoxyéthyle à 23°C, une viscosité ≤ 5,0 dPa.s, de préférence une viscosité ≤ 3,5 dPa.s, et/ou
4.) en ce que les liants (A1) et/ou (A2) et/ou (A3) et/ou (A4) sont choisis de telle sorte qu'une solution à 50% du liant (A) dans du propionate d'éthoxyéthyle présente, à 23°C, une viscosité ≤ 2,0 dPa.s.

3. Composition de revêtement selon la revendication 1 ou 2, caractérisée en ce que le composant (I) contient en tant que liant (A)
(A1) au moins 50% en poids, de préférence au moins 80% en poids d'au moins un copolymère d'acrylate,
(A2) de 0 à 30% en poids, de préférence de 5 à 20% en poids d'au moins un polyester (A2) et
(A3) de 0 à 30% en poids, de préférence de 5 à 20% en poids d'au moins une résine de polyuréthanne (A3) (A4) de 0 à 10% en poids, de préférence de 0 à 5% en poids d'au moins un liant supplémentaire (A4),
la somme des proportions pondérales des composants (A1) à (A4) étant, dans chaque cas, de 100% en poids.

4. Composition de revêtement selon l'une quelconque des revendications 1 à 3, caractérisée en ce que le copolymère d'acrylate (A1) peut être obtenu en polymérisant, dans un solvant ou un mélange de solvants organiques, et en présence d'au moins un amorceur de polymérisation,
a1) un ester (méth)acrylique essentiellement dépourvu de groupe carboxy, différent de (a2), (a3), (a4), (a5) et (a6) et copolymérisable avec (a2), (a3), (a4), (a5) et (a6), ou un mélange de tels monomères,
a2) un monomère éthyléniquement insaturé copolymérisable avec (a1), (a3), (a4), (a5) et (a6), différent de (a5), qui renferme au moins un groupe hydroxy par molécule et qui est essentiellement dépourvu de groupe carboxy, ou un mélange de tels monomères,
a3) un monomère éthyléniquement insaturé renfermant au moins un groupe carboxy par molécule et copolymérisable avec (a1), (a2), (a4), (a5) et (a6), ou un mélange de tels monomères et
a4) éventuellement un ou plusieurs esters vinyliques d'acides monocarboxyliques ramifiés en position α, ayant de 5 à 18 atomes de carbone par molécule et/ou
a5) éventuellement au moins un produit de réaction de l'acide acrylique et/ou de l'acide méthacrylique avec l'ester glycidylique d'un acide monocarboxylique ramifié en position α, ayant de 5 à 18 atomes de carbone par molécule, ou à la place du produit de réaction, une quantité équivalente d'acide acrylique et/ou méthacrylique, qui est alors mise à réagir, pendant ou après la réaction de polymérisation, avec l'ester glycidylique d'un acide monocarboxylique ramifié en position α, ayant de 5 à 18 atomes de carbone par molécule,
a6) éventuellement un monomère éthyléniquement insaturé essentiellement dépourvu de groupe carboxy, copolymérisable avec (a1), (a2), (a3), (a4) et (a5) et différent de (a1), (a2), (a4) et (a5), ou un mélange de tels monomères,
(a1), (a2), (a3), (a4), (a5) et (a6) étant choisis, en ce qui concerne la nature et la quantité, de telle sorte que la résine de polyacrylate (A1) présente l'indice OH et l'indice d'acide souhaités et le poids moléculaire souhaité.

5. Composition de revêtement selon l'une quelconque des revendications 1 à 4, caractérisée en ce que la résine de polyester (A2) peut être obtenue en faisant réagir
p1) des acides polycarboxyliques ou leurs dérivés estérifiants, éventuellement conjointement avec des acides monocarboxyliques
p2) des polyols, éventuellement conjointement avec des mono-ols,
p3) éventuellement des composants supplémentaires qui renferment des groupes réactifs vis-à-vis des groupes fonctionnels du polyester et
p4) éventuellement un composant qui renferme, en plus d'un groupe réactif vis-à-vis des groupes fonctionnels du polyester (A2), également un groupe amino tertiaire.

6. Composition de revêtement selon l'une quelconque des revendications 1 à 5, caractérisée en ce que la résine de polyuréthanne peut être obtenue en utilisant un composant alcool qui comprend, au moins en une certaine proportion,
u1) au moins un diol de formule (I) 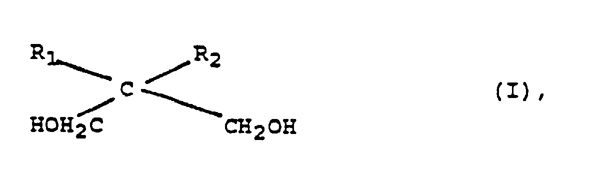 dans laquelle R₁ et R₂ représentent chacun un radical identique ou différent et désignent un radical alkyle ayant de 1 à 18 atomes de carbone, un radical aryle ou un radical cycloaliphatique, à condition que R₁ et/ou R₂ ne puissent pas être un méthyle, et/ou
u2) au moins un diol de formule (II) 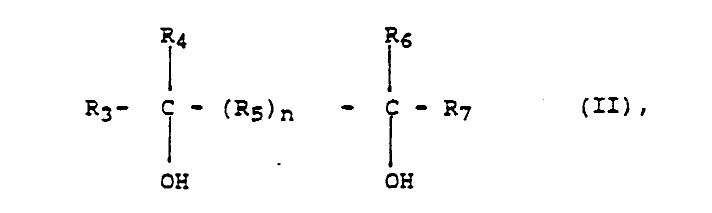 dans laquelle R₃, R₄, R₆ et R₇ représentent chacun un radical identique ou différent et désignent un radical alkyle ayant de 1 à 6 atomes de carbone, un radical cycloalkyle ou un radical aryle, et R₅ représente un radical alkyle ayant de 1 à 6 atomes de carbone, un radical aryle ou un radical alkyle insaturé ayant de 1 à 6 atomes de carbone et n vaut soit 0 soit 1,
et/ou en utilisant des diisocyanates de formule générale (III) : 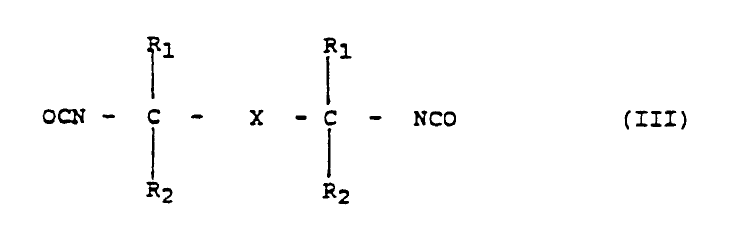 dans laquelle X désigne un radical hydrocarboné aromatique bivalent, de préférence un radical naphtylène, diphénylène ou 1,2-, 1,3- ou 1,4-phénylène, éventuellement halogéno-, méthyl- ou méthoxy-substitué, particulièrement préférablement un radical 1,3-phénylène, et R₁ et R2 désignent un radical alkyle ayant 1-4 atomes de carbone, de préférence un radical méthyle.

7. Composition de revêtement selon l'une quelconque des revendications 1 à 6, caractérisée en ce que le composant (II) contient en tant qu'agent de réticulation
(F1) au moins 70% en poids, de préférence de 80 à 100% en poids d'un di- et/ou polyisocyanate non bloqué (F1),
(F2) de 0 à 30% en poids, de préférence de 2 à 20% en poids, d'au moins un composé époxyde (F2) ayant au moins 2 groupes époxy par molécule et
(F3) de 0 à 30% en poids, de préférence de 2 à 20% en poids, d'au moins une résine aminoplaste (F3),
dans chaque cas par rapport au poids total de l'agent de réticulation (F).

8. Composition de revêtement selon l'une quelconque des revendications 1 à 7, caractérisée en ce que le composant (I) comprend
(A) de 20 à 90% en poids, de préférence de 35 à 80% en poids, du liant (A),
(B) de 0 à 60% en poids, de préférence de 5 à 50% en poids, d'au moins un pigment et/ou une charge,
(C) de 5 à 50% en poids, de préférence de 10 à 40% en poids, d'au moins un solvant organique diluable à l'eau et
(D) de 0 à 20% en poids, de préférence de 2 à 10% en poids, d'au moins un agent neutralisant
(E) de 0 à 20% en poids, de préférence de 2 à 10% en poids, d'au moins un auxiliaire et/ou additif habituels,
la somme des proportions pondérales des composants (A) à (E) étant dans chaque cas de 100% en poids, et le composant (II) comprend
(F) de 50 à 100% en poids, de préférence de 60 à 90% en poids, d'au moins un agent de réticulation (F),
(G) de 0 à 50% en poids, de préférence de 10 à 40% en poids, d'au moins un solvant organique miscible à l'eau et
(H) de 0 à 20% en poids, de préférence de 0 à 10% en poids d'au moins un auxiliaire et/ou additif habituel,
la somme des proportions pondérales des composants (F) à (H) étant dans chaque cas de 100% en poids, et le composant (III) comprend
(I) de 80 à 100% en poids, de préférence de 80 à 95% en poids d'eau,
(J) de 0 à 20% en poids, de préférence de 2 à 10% en poids, d'au moins un agent neutralisant,
(K) de 0 à 20% en poids, de préférence de 2 à 10% en poids, d'au moins un auxiliaire et/ou additif habituel et
(L) de 0 à 20% en poids, de préférence de 0 à 10% en poids, d'au moins un polymère en émulsion,
la somme des proportions pondérales des composants (I) à (L) étant, dans chaque cas, de 100% en poids.

9. Composition de revêtement selon l'une quelconque des revendications 1 à 8, caractérisée en ce que les composants (I) et (II) sont présents en quantités telles que le rapport d'équivalents entre les groupes hydroxy du liant (A) et les groupes réticulants de l'agent de réticulation (F) soit compris entre 1:1 et 2:1, de préférence entre 1:1,2 et 1:1,5.

10. Procédé de préparation de la composition de revêtement selon l'une quelconque des revendications 1 à 9, caractérisé en ce que l'on prépare d'abord une solution du liant (A) dans le solvant organique diluable à l'eau, on disperse les autres constituants du composant (I) dans cette solution de liant et soit
(i) on mélange alors le composant (I) ainsi obtenu avec le composant (II) et éventuellement le composant (IV), qui comprend une partie ou la quantité totale des auxiliaires et additifs utilisés dans la composition de revêtement et, ensuite, soit on ajoute le composant (III) soit on ajoute le mélange obtenu au composant (III),
soit
(ii) on ajoute le composant (I) ainsi obtenu au composant (III) ou le composant (III) au composant (I) ainsi obtenu et on ajoute ensuite les composants (II) et éventuellement (IV).

11. Utilisation de la composition de revêtement selon l'une quelconque des revendications 1 à 9 pour des retouches, en particulier pour des retouches d'automobiles.

12. Utilisation de la composition de revêtement selon l'une quelconque des revendications 1 à 9 pour le revêtement de matières plastiques.

13. Utilisation de la composition de revêtement selon l'une quelconque des revendications 1 à 9 en tant que couche de finition et/ou charge.
